# EUROPEAN PATENT APPLICATION

(11) **EP 4 596 274 A1**
(43) Date of publication of application: **06.08.2025**
(21) Application number: 23871075.0
(22) Date of filing: 28.09.2023
(51) Int. Cl.: B60H 1/00, H01M 10/617, H01M 10/663, H01M 10/625, H01M 10/615, H01M 10/613

(54) **THERMAL MANAGEMENT SYSTEM AND VEHICLE HAVING SAME**

(30) Priority: 29.09.2022 CN 202211204910
(71) Applicant: BYD Company Limited, Shenzhen, Guangdong 518118 (CN)
(72) Inventor: LING, Heping, Shenzhen, Guangdong 518118 (CN); HUANG, Wei, Shenzhen, Guangdong 518118 (CN); MA, Rui, Shenzhen, Guangdong 518118 (CN); ZHENG, Fuwei, Shenzhen, Guangdong 518118 (CN); LUO, Yili, Shenzhen, Guangdong 518118 (CN)
(74) Representative: Mathys & Squire
(86) International application number: PCT/CN2023/122856
(87) International publication number: WO 2024/067851

(57) **Abstract**

A thermal management system and a vehicle having same. The thermal management system comprises: a battery thermal management subsystem, the battery thermal management subsystem comprising a first trunk line (10a) and a second trunk line (10b), the first trunk line (10a) being used for exchanging heat with a first region of a battery, the second trunk line (10b) being used for exchanging heat with a second region of the battery, the first region being different from the second region, and at least one of the first trunk line (10a) and the second trunk line (10b) exchanging heat with the battery; and at least one first heat exchanger (791), the first heat exchanger (791) being arranged on the battery thermal management subsystem and an air conditioning subsystem, and the battery thermal management subsystem and the air conditioning subsystem exchanging heat by means of the first heat exchanger.

## Description

### CROSS-REFERENCE TO RELATED APPLICATIONS

The present disclosure claims priority to Chinese Patent Application No. 2022112049102, entitled "THERMAL MANAGEMENT SYSTEM AND VEHICLE HAVING SAME" and filed by BYD Co., Ltd. on September 29, 2022.

### FIELD

The disclosure relates to the field of vehicle technologies, and in particular, to a thermal management system and a vehicle having the same.

### BACKGROUND

In an existing heat pump system architecture for thermal management of a whole vehicle, a thermal management system is not functionally diversified, heat exchange of a battery module often fails to meet a battery temperature, energy loss is large, and working efficiency of the thermal management system is low.

### SUMMARY

The present disclosure aims to resolve at least one of the technical problems in the related art to some extent.

An objective of the present disclosure is to provide a thermal management system, the battery heat exchange module is allowed to exchange heat with the battery with suitable efficiency, so that energy consumption of the thermal management system can be reduced, and working efficiency of the thermal management system can be improved.

The thermal management system according to embodiments of the present disclosure includes: a battery thermal management subsystem, the battery thermal management subsystem including a first trunk line and a second trunk line, the first trunk line being configured to exchange heat with a first region of a battery, the second trunk line being configured to exchange heat with a second region of the battery, the first region and the second region being different, and at least one of the first trunk line and the second trunk line exchanging heat with the battery; and at least one first heat exchanger, the first heat exchanger being arranged at the battery thermal management subsystem and an air conditioning subsystem, and the battery thermal management subsystem and the air conditioning subsystem exchanging heat through the first heat exchanger.

In the thermal management system according to the embodiments of the present disclosure, heat can be exchanged to the first region and the second region of the battery by using the first trunk line and the second trunk line respectively, so that the battery can exchange heat in a plurality of regions with different efficiency, to enable the battery thermal management subsystem to exchange heat with the battery with proper efficiency, thereby reducing energy consumption of the thermal management system, and improving the functionality of the thermal management system.

The vehicle according to the embodiments of the present disclosure includes the foregoing thermal management system.

Other aspects and advantages of the present disclosure will be given in the following description, some of which will become apparent from the following description or may be learned from practices of the present disclosure.

### BRIEF DESCRIPTION OF THE DRAWINGS

FIG. 1 is a schematic structural diagram of a thermal management system according to an embodiment of the present disclosure;
FIG. 2 is a schematic structural diagram of a thermal management system and a power thermal management subsystem according to an embodiment of the present disclosure;
FIG. 3 is a schematic diagram of a first implementation of a battery core according to the present disclosure;
FIG. 4 is a schematic diagram of a second implementation of a battery core according to the present disclosure;
FIG. 5 is a schematic diagram of a first implementation of a battery pack according to the present disclosure;

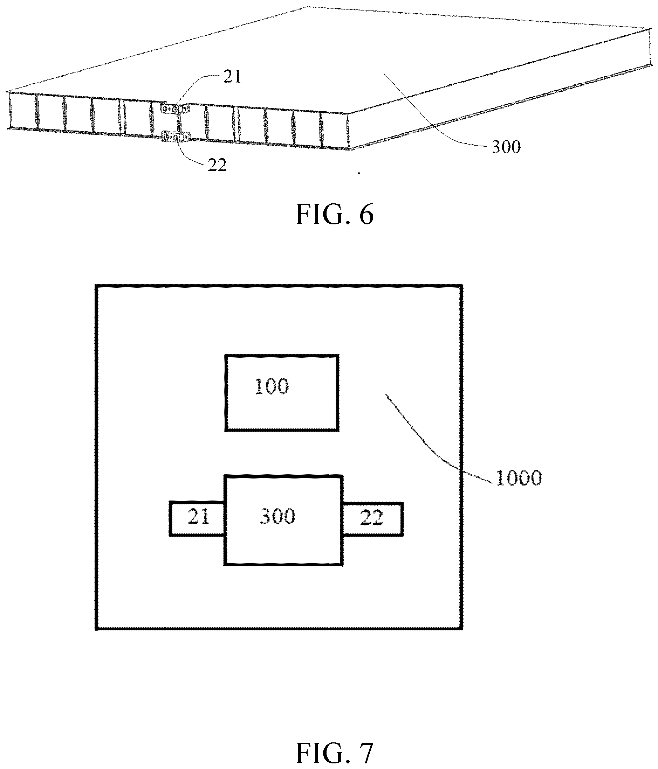

FIG. 6 is a schematic diagram of a second implementation of a battery pack according to the present disclosure;
FIG. 7 is a schematic diagram of a vehicle according to some embodiments of the present disclosure;
FIG. 8 is a schematic diagram 1 of a thermal management system according to an embodiment of the present disclosure; and
FIG. 9 is a schematic diagram 2 of a thermal management system according to an embodiment of the present disclosure.

### DETAILED DESCRIPTION

The following describes embodiments of the present disclosure in detail. Examples of the embodiments are shown in the accompanying drawings, and same or similar reference signs in all the accompanying drawings indicate same or similar components or components having same or similar functions. The embodiments that are described with reference to the accompany drawings are exemplary, and are intended to interpret the present disclosure, instead limiting the present disclosure.

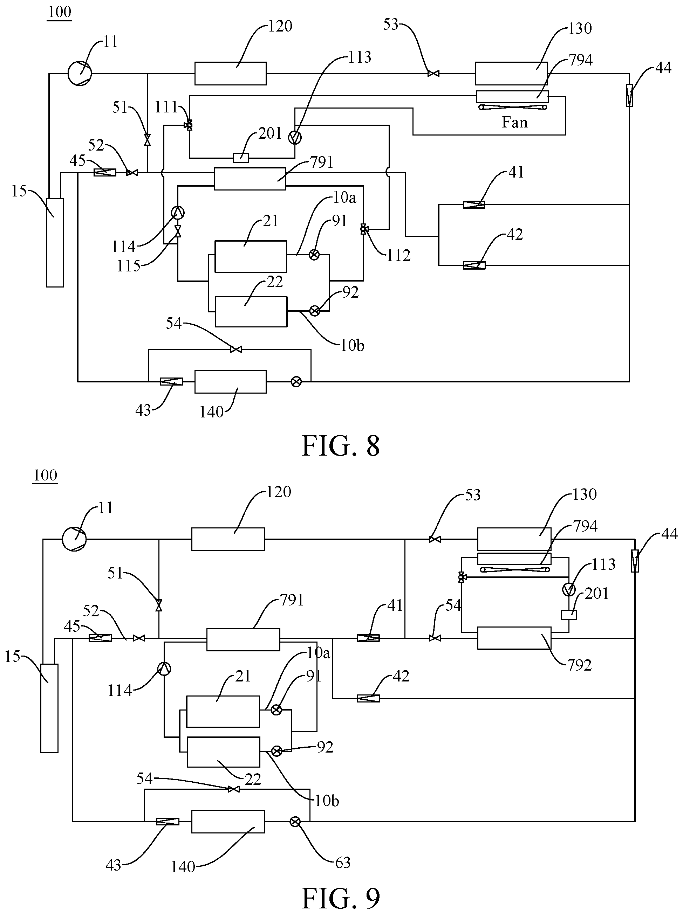

A thermal management system 100 according to the embodiments of the present disclosure will be described below with reference to FIG. 8 and FIG. 9.

The thermal management system according to the embodiments of the present disclosure includes: a battery thermal management subsystem and at least one first heat exchanger 791.

As shown in FIG. 8 and FIG. 9, the battery thermal management subsystem includes a first trunk line 10a and a second trunk line 10b. In addition, the first trunk line 10a is configured to exchange heat with a first region of a battery, the second trunk line 10b is configured to exchange heat with a second region of the battery, the first region and the second region being different, and at least one of the first trunk line 10a and the second trunk line 10b exchange heat with the battery, to regulate a temperature of the battery.

It may be understood that the first trunk line 10a and the second trunk line 10b have working mediums circulating therein, and may exchange heat with the battery through the working mediums. The working mediums in the first trunk line 10a and the second trunk line 10b may be the same or different, and the first trunk line 10a and the second trunk line 10b are mutually independent, and may exchange heat with the battery separately. For example, heat exchange with the first region is performed through the first trunk line 10a; or heat exchange with the second region is performed through the second pipeline; or heat exchange with the first region is performed through the first trunk line 10a, and heat exchange with the second region is performed through the second pipeline.

It should be noted that, because the first trunk line 10a and the second trunk line 10b are arranged independently of each other, the first trunk line 10a and the second trunk line 10b can exchange heat with the battery with different efficiency, to meet heat exchange requirements of the battery in different regions (that is, the first region and the second region).

The first trunk line 10a exchanges heat with the first region of the battery, and the second trunk line 10b exchanges heat with the second region of the battery. That is, the first trunk line 10a and the second trunk line 10b respectively correspond to different regions of the battery. According to heat exchange requirements of the battery in the different regions (that is, the first region and the second region), the first trunk line 10a and the second trunk line 10b exchange heat with the corresponding regions, to implement partitioned heat exchange of the battery, so that the heat exchange requirements of the battery in the different regions can be satisfied, thereby improving the heat exchange efficiency of the thermal management system, and improving the heat exchange effect of the battery.

In addition, the first heat exchanger 791 is arranged at the battery thermal management subsystem and an air conditioning subsystem, and the battery thermal management subsystem and the air conditioning subsystem exchange heat through the first heat exchanger 791.

It may be understood that heat exchange between the battery thermal management subsystem and the air conditioning subsystem may be implemented through the first heat exchanger 791. Therefore, a component (for example, a battery) in the battery thermal management subsystem may be heated through the air conditioning subsystem, that is, a working medium (for example, a cooling medium) in the air conditioning subsystem exchanges heat with a working medium in the battery thermal management subsystem at the first heat exchanger 791, so that a temperature of the working medium in the battery thermal management subsystem is increased, thereby heating the battery through the working medium with the temperature increased; or a component in the battery thermal management subsystem may be cooled through the air conditioning subsystem, that is, a working medium (for example, a cooling medium) in the air conditioning subsystem exchanges heat with a working medium in the battery thermal management subsystem at the first heat exchanger 791, so that a temperature of the working medium in the battery thermal management subsystem is reduced, thereby heating the battery through the working medium with the temperature increased.

In the thermal management system according to the embodiments of the present disclosure, heat can be exchanged to the first region and the second region of the battery by using the first trunk line 10a and the second trunk line 10b respectively, so that the battery can exchange heat in a plurality of regions with different efficiency, to enable the battery thermal management subsystem to exchange heat with the battery with proper efficiency, thereby reducing energy consumption of the thermal management system, and improving the functionality of the thermal management system. In some embodiments of the present disclosure, the first heat exchanger 791 includes a first flow channel and a second flow channel that exchange heat with each other, the first flow channel is arranged at the air conditioning subsystem, and the first flow channel is configured to circulate the working medium in the air conditioning subsystem.

Referring to FIG. 8, the first trunk line 10a and the second trunk line 10b are connected in parallel, and two ends of the second flow channel are respectively connected to two ends of the first trunk line 10a to form a first heat exchange circuit. The working medium flowing out through the second flow channel may flow into the first trunk line 10a, and flow back into the second flow channel after flowing through the first trunk line 10a, to circulate the working medium.

Referring to FIG. 8, the first trunk line 10a and the second trunk line 10b are arranged in parallel, and the working medium flowing out through the second flow channel may also flow into the second trunk line 10b, and flow back into the second flow channel after flowing through the second trunk line 10b, to circulate the working medium.

In addition, because the first trunk line 10a and the second trunk line 10b are arranged in parallel, flows of the working mediums in the first trunk line 10a and the second trunk line 10b may be independently controlled and regulated.

As shown in FIG. 8, in an embodiment of the present disclosure, the first trunk line 10a is provided with a first regulating valve 91 used for flow regulation, and the second trunk line 10b is provided with a second regulating valve 92 used for flow regulation.

The first regulating valve 91 may regulate a flow in the first trunk line 10a, to regulate efficiency of heat exchange between the first trunk line 10a and the battery. When the efficiency of heat exchange between the first trunk line 10a and the battery needs to be improved, the opening degree of the first regulating valve 91 may be increased, to increase the flow of the working medium in the first trunk line 10a. When the efficiency of heat exchange between the first trunk line 10a and the battery needs to be reduced, the opening degree of the first regulating valve 91 may be reduced, to reduce the flow of the working medium in the first trunk line 10a.

Similarly, the second regulating valve 92 may regulate a flow in the second trunk line 10b, to regulate efficiency of heat exchange between the second trunk line 10b and the battery. When the efficiency of heat exchange between the second trunk line 10b and the battery needs to be improved, the opening degree of the second regulating valve 92 may be increased, to increase the flow of the working medium in the second trunk line 10b. When the efficiency of heat exchange between the second trunk line 10b and the battery needs to be reduced, the opening degree of the second regulating valve 92 may be reduced, to reduce the flow of the working medium in the second trunk line 10b.

Therefore, the flows of the working mediums in the first trunk line 10a and the second trunk line 10b may be regulated through the first regulating valve 91 and the second regulating valve 92, to regulate the heat exchange efficiency of the first trunk line 10a and the second trunk line 10b, so that the battery thermal management subsystem can exchange heat to the battery in different regions with proper efficiency.

In some embodiments of the present disclosure, opening degrees of the first regulating valve 91 and the second regulating valve 92 are adjusted, to cause heat exchange amounts of the first trunk line 10a and the second trunk line 10b to be different, thereby differently exchanging heat for the battery in different regions.

The first trunk line 10a is configured to exchange heat to the first region, and the second trunk line 10b is configured to exchange heat to the second region. When the heat exchange amounts of the first trunk line 10a and the second trunk line 10b are different, the heat exchange efficiency of the battery in the first region and the second region is also different, so that the battery can differently exchange heat in different region ranges.

In some embodiments of the present disclosure, a temperature of the first region is different from a temperature of the second region. It should be noted that the temperature difference means that the temperatures of the first region and the second region are different when the battery is in a working state. Working states of the battery includes charging, discharging, and the like. The temperature difference may include: an average temperature of the first region is different from an average temperature of the second region; or a highest temperature of the first region is different from a highest temperature of the second region; or a lowest temperature of the first region is different from a lowest temperature of the second region. Alternatively, a temperature of at least part of the first region is different from a temperature of at least part of the second region at a same detection time point.

Therefore, exchanging heat to the first region and the second region with different heat exchange amounts through the first trunk line 10a and the second trunk line 10b respectively can satisfy heat exchange requirements of the battery in different regions, so that temperatures of the battery in a plurality of regions can be kept close or consistent, thereby improving temperature uniformity of the battery.

It may be understood that, if a temperature of the first region is higher than a temperature of the second region; or a temperature rise rate of the first region is higher than a temperature rise rate of the second region; or the first region is an electrode region of the battery 300, and the second region is a non-electrode region of the battery 300, the first trunk line 10a and the second trunk line 10b may be used to implement independent heat exchange between the first region and the second region, to implement partitioned temperature control. For example, a heat exchange amount of the first trunk line 10a may be greater than a heat exchange amount of the second trunk line 10b, or a temperature of a heat exchange medium in the first trunk line 10a may be lower than a temperature of a heat exchange medium in the second trunk line 10b during cooling, so that a temperature drop speed of the first region is higher, thereby implementing temperature uniformity of the battery 300.

In some embodiments of the present disclosure, when a temperature of the battery is ≥ a first temperature threshold, a temperature of the first region is higher than a temperature of the second region, at least one of the first trunk line 10a and the second trunk line 10b cools the battery, and the heat exchange amount of the first trunk line 10a is greater than the heat exchange amount of the second trunk line 10b.

When the temperature of the battery reaches the first temperature threshold, the temperature of the first region is higher than the temperature of the second region. In this case, the first region needs a larger heat exchange amount than the second region to reduce the temperature to be close to or the same as the temperature of the second region, so that the heat exchange amount of the first trunk line 10a is regulated to be greater than the heat exchange amount of the second trunk line 10b, to preferentially cool the first region, improve the heat exchange efficiency of the first region, and implement the temperature uniformity of the battery.

In some other embodiments of the present disclosure, when a temperature of the battery is ≥ a first temperature threshold, a temperature rise rate of the first region is higher than a temperature rise rate of the second region, at least one of the first trunk line 10a and the second trunk line 10b cools the battery, and the heat exchange amount of the first trunk line 10a is greater than the heat exchange amount of the second trunk line 10b.

When the temperature of the battery reaches the first temperature threshold, the temperature rise rate of the first region is higher than the temperature rise rate of the second region, and the first region needs a larger heat exchange amount than the second region to slow down the temperature rise, so that the heat exchange amount of the first trunk line 10a is regulated to be greater than the heat exchange amount of the second trunk line 10b, to preferentially cool the first region, improve the heat exchange efficiency of the first region, and implement the temperature uniformity of the battery.

In some other embodiments of the present disclosure, when a temperature of the battery is ≥ a first temperature threshold, the first region is an electrode region of the battery, the second region is a non-electrode region of the battery, at least one of the first trunk line 10a and the second trunk line 10b cools the battery, and the heat exchange amount of the first trunk line 10a is greater than the heat exchange amount of the second trunk line 10b.

The first region is the electrode region, the second region is the non-electrode region, and the temperature rise rate of the first region is higher than the temperature rise rate of the second region. That is, the first region needs a larger heat exchange amount than the second region to slow down the temperature rise, so that the heat exchange amount of the first trunk line 10a is regulated to be greater than the heat exchange amount of the second trunk line 10b, to preferentially cool the first region, improve the heat exchange efficiency of the first region, and implement temperature uniformity of the battery.

It should be noted that, in the foregoing embodiment, when the temperature of the battery reaches the first temperature threshold, the battery needs to be cooled, and a region with a higher temperature rise rate and a high temperature is preferentially cooled.

In some embodiments of the present disclosure, the first temperature threshold Tmax is ≥ 38°C. When the temperature of the battery reaches the first temperature threshold, a difference occurs between the temperatures of the battery in the first region and the second region, so that heat can be exchanged to the corresponding regions through the first trunk line 10a and the second trunk line 10b, to meet a heat exchange requirement of the battery.

In some embodiments of the present disclosure, when a temperature of the battery is ≤ a second temperature threshold, a temperature of the first region is higher than a temperature of the second region, at least one of the first trunk line 10a and the second trunk line 10b heats the battery, and the heat exchange amount of the second trunk line 10b is greater than the heat exchange amount of the second trunk line 10b.

When the temperature of the battery is reduced to the second temperature threshold, if the temperature of the first region is higher than the temperature of the second region, the first region needs a smaller heat exchange amount than the second region to increase the temperature to be close to or the same as the temperature of the second region, so that the heat exchange amount of the second trunk line 10b is regulated to be greater than the heat exchange amount of the first trunk line 10a, to preferentially heat the second region, improve the heat exchange efficiency of the second region, and implement the temperature uniformity of the battery.

In some other embodiments of the present disclosure, when a temperature of the battery is ≤ a second temperature threshold, a temperature rise rate of the first region is higher than a temperature rise rate of the second region, at least one of the first trunk line 10a and the second trunk line 10b heats the battery, and the heat exchange amount of the second trunk line 10b is greater than the heat exchange amount of the second trunk line 10b.

When the temperature of the battery is reduced to the second temperature threshold, if the temperature rise rate of the first region is higher than the temperature rise rate of the second region, the first region needs a smaller heat exchange amount than the second region to increase the temperature to be close to or the same as the temperature of the second region, so that the heat exchange amount of the second trunk line 10b is regulated to be greater than the heat exchange amount of the first trunk line 10a, to preferentially heat the second region, improve the heat exchange efficiency of the second region, and implement the temperature uniformity of the battery.

In some other embodiments of the present disclosure, when a temperature of the battery is ≤ a second temperature threshold, the first region is an electrode region of the battery, the second region is a non-electrode region of the battery, at least one of the first trunk line 10a and the second trunk line 10b heats the battery, and the heat exchange amount of the second trunk line 10b is greater than the heat exchange amount of the second trunk line 10b.

The first region is the electrode region, the second region is the non-electrode region, and the temperature rise rate of the first region is higher than the temperature rise rate of the second region. That is, the first region needs a smaller heat exchange amount than the second region to reach the temperature close to or the same as the temperature of the second region, so that the heat exchange amount of the second trunk line 10b is regulated to be greater than the heat exchange amount of the first trunk line 10a, to preferentially heat the second region, improve the heat exchange efficiency of the second region, and implement the temperature uniformity of the battery.

It should be noted that, in the foregoing embodiment, when the temperature of the battery reaches the first temperature threshold, the battery needs to be heated, and a region with a lower temperature rise rate and a low temperature is preferentially cooled.

In some embodiments of the present disclosure, when the lowest temperature of the battery is ≤ 10°C, at least one of the first trunk line and the second trunk line is controlled to heat the battery. When the lowest temperature of the battery is ≥ 12°C, heating is stopped.

In some embodiments of the present disclosure, when it is determined that the highest temperature of the battery is ≥ 38°C, at least one of the first trunk line and the second trunk line is controlled to cool the battery. When it is determined that the highest temperature of the battery is ≤ 34°C, cooling is stopped.

In some embodiments of the present disclosure, if the temperature rise rate of the first region is ≥ 2.5°C/min, and the temperature rate of the second region is < 2.5°C/min, or the temperature rate of the second region is < 1.5°C/min, it indicates that the temperature rise rates of the first region and the second region are different.

In some embodiments of the present disclosure, when it is determined that the temperature rise rate of the first region is ≥ 2.5°C/min or TH-TL = TO and TO ≥ 10°C, a partitioned control mode is enabled. When it is determined that the temperature rise rate of the first region is < 1°C/min or TO < 10°C, the partitioned control mode is exited.

In some embodiments of the present disclosure, when it is determined that the temperature rise rate of the first region is ≥ 2.5°C/min, and the lowest temperature of the battery is > 10°C, a cooling sub-region control mode is controlled to be entered, the first region is controlled to be preferentially cooled, and the heat exchange amount of the first trunk line is controlled to be greater than the heat exchange amount of the second trunk line.

In some embodiments of the present disclosure, when it is determined that TO is ≥ 10°C, and the lowest temperature of the battery is > 10°C, a cooling sub-region control mode is controlled to be entered, the first region is controlled to be preferentially cooled, and the heat exchange amount of the first trunk line is controlled to be greater than the heat exchange amount of the second trunk line.

In some embodiments of the present disclosure, when it is determined that the temperature rise rate of the first region is ≥ 2.5°C/min, and the lowest temperature of the battery is < 10°C, a heating partitioned control mode is controlled to be entered, the second region is controlled to be preferentially heated, and the heat exchange amount of the second trunk line is controlled to be greater than the heat exchange amount of the first trunk line.

In some embodiments of the present disclosure, when it is determined that TO is ≥ 10°C, and the lowest temperature of the battery is < 10°C, a heating partitioned control mode is controlled to be entered, the second region is controlled to be preferentially heated, and the heat exchange amount of the second trunk line is controlled to be greater than the heat exchange amount of the first trunk line.

In some embodiments of the present disclosure, when it is determined that the highest temperature of the battery is ≥ 40°C, TH-TL = T0, and TO ≥ 10°C, the partitioned control mode is enabled. When it is determined that the highest temperature of the battery is < 40°C, TH-TL = T0, and TO < 10°C, the partitioned control mode is exited.

In some embodiments of the present disclosure, when it is determined that the highest temperature of the battery is ≥ 40°C, TH-TL = T0, TO ≥ 10°C, and the lowest temperature of the battery is > 10°C, a cooling sub-region control mode is controlled to be entered, the first region is controlled to be preferentially cooled, and the heat exchange amount of the first trunk line is controlled to be greater than the heat exchange amount of the second trunk line.

In some embodiments of the present disclosure, when it is determined that the highest temperature of the battery is ≤ -10°C, TH-TL=T0, TO is ≥ 10°C, and the lowest temperature of the battery is < 10°C, a heating partitioned control mode is controlled to be entered, the second region is controlled to be preferentially heated, and the heat exchange amount of the second trunk line is controlled to be greater than the heat exchange amount of the first trunk line.

In the above description, "TH" is the highest temperature of the battery, and "TL" is the lowest temperature of the battery.

In some embodiments of the present disclosure, the thermal management system further includes a power thermal management subsystem 200 configured to dissipate heat for a power module, to reduce a temperature of the power module through the power thermal management subsystem 200, thereby preventing the temperature of the power module from being excessively high.

The power module may include a power device such as a motor.

As shown in FIG. 8, in some embodiments of the present disclosure, the power thermal management subsystem 200 exchanges heat with the air conditioning subsystem through the first heat exchanger 791.

The power thermal management subsystem 200 may exchange heat with the air conditioning subsystem, to transfer heat in the power thermal management subsystem 200 to a side of the air conditioning subsystem, thereby improving a cooling effect of the power thermal management subsystem 200 on the power module through the air conditioning subsystem.

As shown in FIG. 9, in some embodiments of the present disclosure, the thermal management system further includes: a second heat exchanger 792. The second heat exchanger 792 is arranged at the air conditioning subsystem and the power thermal management subsystem 200, and the power thermal management subsystem 200 exchanges heat with the air conditioning subsystem through the second heat exchanger 792.

Therefore, the heat in the power thermal management subsystem 200 may be transferred to a side of the air conditioning subsystem through the second heat exchanger 792, thereby improving a cooling effect of the power thermal management subsystem 200 on the power module through the air conditioning subsystem.

As shown in FIG. 8, in some embodiments of the present disclosure, the thermal management system further includes a switching module. The switching module is connected to the power thermal management subsystem 200 and the battery thermal management subsystem separately to enable the power thermal management subsystem 200 to connect to or disconnect from the battery thermal management subsystem.

Therefore, by arranging the switching module, an on state and an off state between the power thermal management subsystem 200 and the battery thermal management subsystem can be switched, to switch flow lines of working mediums in the power thermal management subsystem 200 and the battery thermal management subsystem, thereby meeting heat exchange requirements of the thermal management system in different modes.

Referring to FIG. 8 and FIG. 9, in some embodiments of the present disclosure, the power thermal management subsystem 200 includes: a motor heat spreader 794 and a third heat exchanger 793. Two ends of the third heat exchanger 793 are respectively connected to two ends of the motor heat spreader 794 to form a coolant circuit.

The third heat exchanger 793 may be configured to dissipate heat for the power module, and working mediums circulating in the third heat exchanger 793 and the motor heat spreader 794 may dissipate heat for the power module.

As shown in FIG. 8, in some embodiments of the present disclosure, the first heat exchanger 791 includes a first flow channel and a second flow channel that exchange heat with each other, the first flow channel is arranged at the air conditioning subsystem, the second flow channel is connected to the battery thermal management subsystem to define at least one heat exchange circuit, and the first trunk line 10a and the second trunk line 10b are located in the heat exchange circuit.

Referring to FIG. 8, the first trunk line 10a and the second trunk line 10b may be arranged in a same heat exchange circuit, and in the heat exchange circuit, the first trunk line 10a and the second trunk line 10b are arranged in parallel. Certainly, the first trunk line 10a and the second trunk line 10b may be respectively arranged in two different heat exchange circuits.

The working medium of the air conditioning subsystem may exchange heat with the working medium in the heat exchange circuit at the first heat exchanger 791.

Referring to FIG. 8, the switching module includes a first three-way valve 111 and a second three-way valve 112, the first three-way valve 111 is connected in series to the heat exchange circuit and has one port connected to a high-pressure thermal management subsystem 201, and the second three-way valve 112 is connected in series to the high-pressure thermal management subsystem 201 and has one valve port connected to the heat exchange circuit.

It should be noted that the high-pressure thermal management subsystem 201 is a part of the power thermal management subsystem 200. In some embodiments, the high-pressure thermal management subsystem 201 is equivalent to the third heat exchanger 793.

Through cooperation between the first three-way valve 111 and the second three-way valve 112, an on state and an off state of the heat exchange circuit and the high-pressure thermal management subsystem 201 may be switched, to optionally enable the heat exchange circuit to communicate with the high-pressure thermal management subsystem 201. For example, only the high-pressure thermal management subsystem 201 in the power thermal management subsystem 200 communicates with the heat exchange circuit, that is, the heat exchange circuit does not communicate with a flow line of another part (for example, the motor heat spreader 794) in the power thermal management power subsystem. In this case, the high-pressure thermal management subsystem 201 and the foregoing heat exchange circuit jointly form a new circulation flow line, and the working medium flowing through the high-pressure thermal management subsystem 201 may exchange heat with the air conditioning subsystem when flowing through the first heat exchanger 791.

As shown in FIG. 8 and FIG. 9, in some embodiments of the present disclosure, the air conditioning subsystem includes: a compressor, an in-vehicle condenser, an out-vehicle condenser, and an in-vehicle evaporator.

The compressor has an exhaust port and an air inlet, the in-vehicle condenser and the out-vehicle condenser are connected in series, a first end of the in-vehicle condenser is connected to the exhaust port, a second end of the in-vehicle condenser is connected to a first end of the out-vehicle condenser, and two ends of the in-vehicle evaporator are respectively connected to a second end of the out-vehicle condenser and the air inlet.

The first heat exchanger 791 includes a first flow channel and a second flow channel that exchange heat with each other, two ends of the first flow channel are respectively connected to the second end of the out-vehicle condenser and the air inlet, the second flow channel is connected to the battery thermal management subsystem to define at least one heat exchange circuit, and the first trunk line 10a and the second trunk line 10b are located in the heat exchange circuit.

Referring to FIG. 8 and FIG. 9, the working medium in the air conditioning subsystem may flow through the first flow channel. Specifically, the working medium may flow into the first flow channel from the out-vehicle condenser through the fourth one-way valve and the second one-way valve sequentially, and flow to a side of the air inlet of the compressor after flowing through the first flow channel.

Referring to FIG. 8 and FIG. 9, the second flow channel is connected to the battery thermal management subsystem, and the working medium in the battery thermal management subsystem may flow through the second flow channel and exchange heat with the working medium flowing through the first flow channel, thereby exchanging heat between the air conditioning subsystem and the battery thermal management subsystem.

Referring to FIG. 8, a cooling path of the working medium in the power thermal management subsystem 200 sequentially passes through the high-pressure thermal management system, the first three-way valve 111, the motor heat spreader 794, and a first pump 113. A cooling path of the working medium in the battery thermal management subsystem sequentially passes through heat exchange components (that is, a first heat exchange component 21 and a second heat exchange component 22 in FIG. 8), an electromagnetic water valve 115, a second pump 114, the first heat exchanger 791, the second three-way valve 112, and regulating valves (the first regulating valve 91 and the second regulating valve 92). A heating path of the working medium in the battery thermal management subsystem sequentially passes through the high-pressure thermal management subsystem 201, the first three-way valve 111, the heat exchange components (that is, the first heat exchange component 21 and the second heat exchange component 22 in FIG. 8), the regulating valves (the first regulating valve 91 and the second regulating valve 92), the second three-way valve 112, and the first pump 113.

A vehicle 1000 according to the embodiments of the present disclosure includes any thermal management system 100 described above.

In the vehicle 1000 according to the embodiments of the present disclosure, by arranging the foregoing thermal management system 100, the quantity of times of battery maintenance or replacement can be reduced, charging efficiency of the vehicle and convenience of use are improved, and a rationalized layout from the vehicle is facilitated.

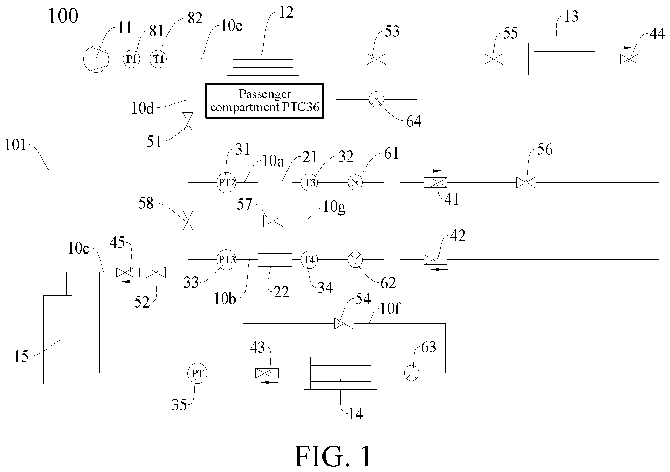

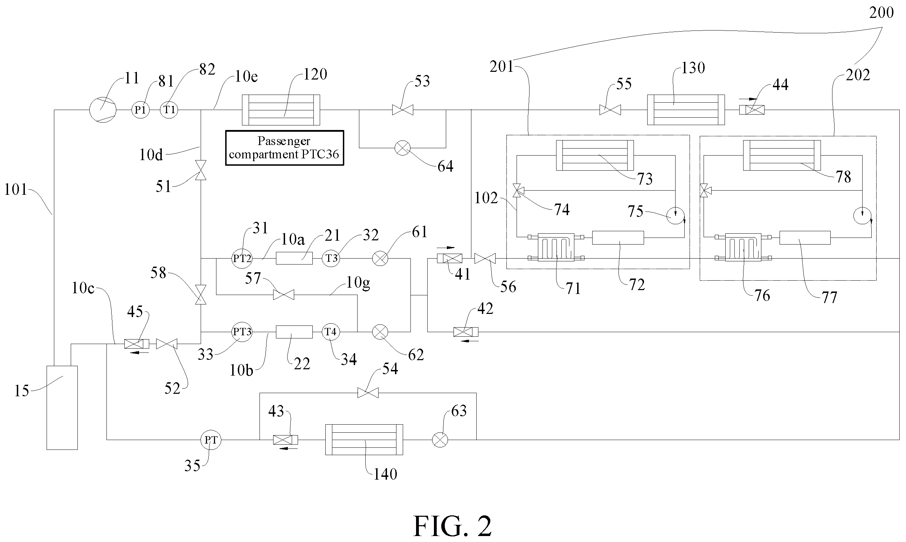

A thermal management system 100 according to the embodiments of the present disclosure will be described below with reference to FIG. 1 and FIG. 2.

The thermal management system 100 according to the embodiments of the present disclosure includes a battery heat exchange module and a controller. The battery heat exchange module includes: a first trunk line 10a and a second trunk line 10b. A first heat exchange component 21 is arranged in the first trunk line 10a, a second heat exchange component 22 is arranged in the second trunk line 10b, and the first heat exchange component 21 and the second heat exchange component 22 are configured to exchange heat with a battery.

The thermal management system 100 of the present disclosure is applied to a vehicle. The vehicle may be a fuel-powered vehicle, a gas-powered vehicle, a new energy vehicle, or a rail vehicle. The new energy vehicle may be a pure electric vehicle, a hybrid electric vehicle, an extended range vehicle, or the like. The battery heat exchange module in the thermal management system 100 is adapted to exchange heat with a battery of the vehicle. The battery may be configured to supply power to the vehicle. For example, the battery may be used as an operating power supply of the vehicle, or the battery may be used as a driving power supply of the vehicle to provide driving power for the vehicle in place of or partially in place of fuel, natural gas, or the like, or the battery may be configured to supply power to some components of the vehicle such as a motor, so that the battery can be used for an working power consumption requirement of at least one of starting, navigation, traveling, and the like of the vehicle.

The first heat exchange component 21 and the second heat exchange component 22 may exchange heat with the battery to regulate a temperature of the battery, so that the battery has a proper working temperature, thereby ensuring stable and reliable working of the battery. For example, in the winter, when the ambient temperature is low, the battery may be heated, to increase the starting speed of the battery. In another example, in the summer, when the ambient temperature is excessively high or the working temperature of the battery is high, the battery may be cooled, to improve the working safety of the battery and extend the service life of the battery.

The thermal management system 100 in the present disclosure further includes a controller. The controller is configured to control, according to the temperature of the battery, at least one of the first trunk line 10a and the second trunk line 10b to exchange heat. The first heat exchange component 21 is arranged in the first trunk line 10a, and the second heat exchange component 22 is arranged in the second trunk line 10b. Therefore, the controller may control one of the first heat exchange component 21 and the second heat exchange component 22 to exchange heat with the battery. Working mediums circulating in the first trunk line 10a and the second trunk line 10b may be the same or different. The working medium may be water, or may be another liquid working medium other than water, or may be another medium that can undergo a phase change, such as carbon dioxide or a cooling medium. For example, a liquid working medium circulates in the first trunk line 10a, and a medium that can undergo a phase change circulates in the second trunk line 10b. For example, the first trunk line 10a may be connected to a high-pressure cooling system or an engine cooling system to circulate a coolant in the high-pressure cooling system or the engine cooling system, and the second trunk line 10b is connected to an air conditioning system to circulate a medium that undergoes a phase change in the air conditioning system.

The controller may control the first heat exchange component 21 to exchange heat with the battery, or the controller may control the second heat exchange component 22 to exchange heat with the battery, or the controller may control both the first heat exchange component 21 and the second heat exchange component 22 to exchange heat with the battery, which may be selected according to an actual need of the battery.

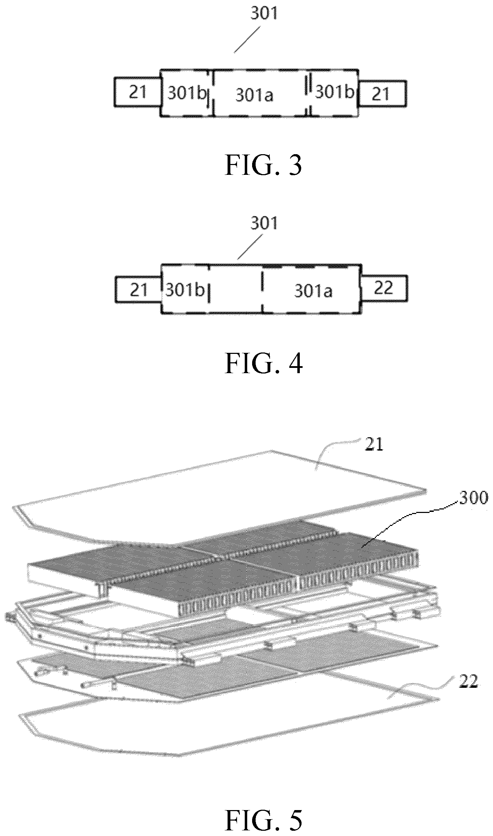

For example, referring to FIG. 5, FIG. 5 is a schematic diagram of an implementation of a battery pack according to the present disclosure. The battery pack includes a battery, a first heat exchange component 21, and a second heat exchange component 22. The battery is arranged between the first heat exchange component 21 and the second heat exchange component 22. The first heat exchange component 21 is arranged on a side of (above) the battery, the second heat exchange component 22 is arranged on another side of (below) the battery, the first heat exchange component is an upper cover of the battery, and the second heat exchange component is a bottom plate of the battery. When the battery needs a large heat exchange amount, the first trunk line 10a and the second trunk line 10b may be allowed to exchange heat simultaneously. When the battery needs a relatively small heat exchange amount, one of the first trunk line 10a and the second trunk line 10b may be allowed to exchange heat. The first heat exchange component 21 is arranged on a side of the battery, and the second heat exchange component 22 is arranged on another side of the battery. When a heat generation amount on a side of the battery is higher than a normal working temperature of the battery, the controller controls a heat exchange component corresponding to the side to cool the battery.

When the battery needs a large heat exchange amount, the first trunk line 10a and the second trunk line 10b may be allowed to exchange heat simultaneously. When the battery needs a relatively small heat exchange amount, one of the first trunk line 10a and the second trunk line 10b may be allowed to exchange heat. The first heat exchange component 21 is arranged on a side of the battery, and the second heat exchange component 22 is arranged on another side of the battery. When a heat generation amount on a side of the battery is higher than a normal working temperature of the battery, the controller controls a heat exchange component corresponding to the side to cool the battery.

The first heat exchange component 21 and the second heat exchange component 22 are mutually independent components and may operate independently of each other, and the first trunk line and the second trunk line have different heat exchange modes. When the first heat exchange component 21 and the second heat exchange component 22 are arranged in different regions of the battery, heat exchange effects of the first heat exchange component 21 and the second heat exchange component 22 may be opposite. For example, the first heat exchange component 21 heats the battery, and the second heat exchange component 22 cools the battery, so that the temperature of the battery is uniform. The thermal management modes of the battery heat exchange module include: The first trunk line and the second trunk line perform heating simultaneously or perform cooling simultaneously, and one of the first trunk line and the second trunk line performs heating and the other of the first trunk line and the second trunk line performs cooling. The battery heat exchange module is adapted to different thermal management modes according to temperatures in different regions of the battery, so that the temperature of the battery is uniform.

For example, referring to FIG. 3 and FIG. 4, FIG. 3 is a schematic diagram of a first implementation of a battery core according to the present disclosure, and FIG. 4 is a schematic diagram of a second implementation of a battery core according to the present disclosure. The battery includes a plurality of battery cores. The plurality of battery cores are arranged in the battery. Electrodes are arranged at two ends of a battery core 301, or an electrode is arranged at one end of the battery core 301. During working of the battery core 301, the electrode generates a large amount of heat. A region near the electrode is an electrode heating region, and a region away from the electrode is a non-electrode heating region. Generally, during working of the battery 300, the electrode generates a large amount of heat, so that a temperature of the region near the electrode is higher pressure than a temperature of the region away from the electrode. On one or two sides of the battery, a first heat exchange component 21 is arranged corresponding to an electrode heating temperature region 301b, and a second heat exchange component 22 is arranged in a non-electrode heating temperature region 301a of the battery. When the temperature of the electrode heating temperature region 301b is higher than the working temperature of the battery, the first heat exchange component 21 cools the electrode heating temperature region 301b. When the temperature of the non-electrode heating temperature region 301a of the battery is lower than the working temperature of the battery, the second heat exchange component 22 heats the non-electrode heating temperature region 301a of the battery.

For example, in a working condition, efficiency with which the first heat exchange component 21 or the second heat exchange component 22 exchanges heat with the battery alone may be lower than efficiency with which the first heat exchange component 21 and the second heat exchange component 22 exchanges heat with the battery together. In addition, heat exchange efficiency of the first heat exchange unit and the second heat exchange unit for the battery may be different. Therefore, by arranging the controller, the first heat exchange component 21, the second heat exchange component 22, or a combination of the first heat exchange component 21 and the second heat exchange component 22 can exchange heat with the battery, and the battery heat exchange module can exchange heat with the battery with different efficiency. According to the temperature of the battery, the battery heat exchange module is allowed to exchange heat with the battery with proper efficiency, so that energy consumption of the thermal management system 100 can be reduced, and the functionality of the thermal management system 100 can be improved.

In the thermal management system 100 according to this embodiment of the present disclosure, the first heat exchange component 21 and the second heat exchange component 22 are arranged, and the controller is arranged to control at least one of the first heat exchange component 21 or the second heat exchange component 22 to exchange heat with the battery, so that the battery heat exchange module exchanges heat with the battery with different efficiency or in different thermal management modes. According to the temperature of the battery, the controller allows the battery heat exchange module to exchange heat with the battery with proper efficiency or in different thermal management modes, so that energy consumption of the thermal management system 100 can be reduced, and the functionality of the thermal management system 100 can be improved.

In some embodiments of the present disclosure, a working medium circulates in each of the first trunk line 10a and the second trunk line 10b, and the working mediums are adapted to exchange heat with the battery at the first heat exchange component 21 and the second heat exchange component 22, to heat or cool the battery.

In some embodiments of the present disclosure, the thermal management system 100 further includes an air conditioning circulation circuit 101. The air conditioning circulation circuit 101 includes a heating branch. The first trunk line 10a is connected in parallel to the heating branch. The second trunk line 10b is connected in parallel to the heating branch. The controller is configured to control at least one of the heating hot branch, the first trunk line 10a, and the second trunk line 10b to exchange heat.

The thermal management system 100 further includes an air conditioning circulation circuit 101, and the air conditioning circulation circuit 101 is adapted to perform heat exchange to a passenger compartment. For example, in the winter, when the ambient temperature is low, the air conditioning circulation circuit 101 may heat the passenger compartment. In the summer, when the ambient temperature is excessively high, the air conditioning circulation circuit 101 may cool the passenger compartment, thereby improving user comfort. The working medium circulates in the air conditioning circulation circuit 101, and the working medium exchanges heat in the heating branch, so as to heat or cool the passenger compartment.

The heating branch of the air conditioning circulation circuit 101 is configured to exchange heat with the passenger compartment, to heat the passenger compartment. The heating branch is connected in parallel to both the first trunk line 10a and the second trunk line 10b, and the heating branch, the first trunk line 10a, and the second trunk line 10b all operate independently of each other, so that heating for the passenger compartment and heat exchange to the battery do not conflict with each other.

The controller may control the heating branch to exchange heat alone, the controller may control the first heat exchange component 21 in the first trunk line 10a to exchange heat alone, or the controller may control the second heat exchange component 22 in the second trunk line 10b to exchange heat alone. The controller may alternatively control the heating branch, the first trunk line 10a, and the second trunk line 10b to cooperate with each other to perform heating together. Alternatively, the controller may control the heating branch, the first trunk line 10a, and the second trunk line 10b to exchange heat simultaneously. The controller may control the battery heat exchange module to heat the battery while controlling the heating branch to heat the passenger compartment. Alternatively, the controller may control the battery heat exchange module to cool the battery while controlling the heating branch to heat the passenger compartment.

In some embodiments of the present disclosure, the air conditioning circulation circuit 101 includes: a cooling branch. The first trunk line 10a is connected in parallel to the cooling branch. The second trunk line 10b is connected in parallel to the cooling branch. The controller is configured to control at least one of the cooling branch, the first trunk line 10a, and the second trunk line 10b to exchange heat.

The cooling branch of the air conditioning circulation circuit 101 is configured to exchange heat with the passenger compartment, to cool the passenger compartment. The cooling branch is connected in parallel to both the first trunk line 10a and the second trunk line 10b, and the cooling branch, the first trunk line 10a, and the second trunk line 10b all operate independently of each other, so that cooling for the passenger compartment and heat exchange to the battery do not conflict with each other.

The controller may control the heating branch to exchange heat alone, the controller may control the first heat exchange component 21 in the first trunk line 10a to exchange heat alone, or the controller may control the second heat exchange component 22 in the second trunk line 10b to exchange heat alone. Alternatively, the controller may control the heating branch, the first trunk line 10a, and the second trunk line 10b to exchange heat simultaneously. The controller may control the battery heat exchange module to heat the battery while controlling the heating branch to cool the passenger compartment. Alternatively, the controller may control the battery heat exchange module to cool the battery while controlling the heating branch to cool the passenger compartment.

In some embodiments of the present disclosure, the air conditioning circulation circuit 101 includes: a cooling branch and a heating branch. The first trunk line 10a is connected in parallel to the cooling branch, the second trunk line 10b is connected in parallel to the cooling branch, the first trunk line 10a is connected in parallel to the heating branch, and the second trunk line 10b is connected in parallel to the heating branch. The controller is configured to control at least one of the heating branch, the cooling branch, the first trunk line 10a, and the second trunk line 10b to exchange heat.

The thermal management system 100 further includes an air conditioning circulation circuit 101, and the air conditioning circulation circuit 101 is adapted to perform heat exchange to a passenger compartment. For example, in the winter, when the ambient temperature is low, the air conditioning circulation circuit 101 may heat the passenger compartment. In the summer, when the ambient temperature is excessively high, the air conditioning circulation circuit 101 may cool the passenger compartment, thereby improving user comfort. The air conditioning circulation circuit 101 includes: a cooling branch and a heating branch. The cooling branch of the air conditioning circulation circuit 101 is configured to exchange heat with the passenger compartment to cool the passenger compartment, and the heating branch of the air conditioning circulation circuit 101 is configured to exchange heat with the passenger compartment to heat the passenger compartment. The working medium circulates in the air conditioning circulation circuit 101, that is, circulates in the heating cooling and the cooling branch, so as to heat or cool the passenger compartment.

The cooling branch is connected in parallel to both the first trunk line 10a and the second trunk line 10b, and the heating branch is connected in parallel to both the first trunk line 10a and the second trunk line 10b. Therefore, the cooling branch, the heating branch, the first trunk line 10a, and the second trunk line 10b all operate independently of each other, and heat exchange to the passenger compartment and heat exchange to the battery do not conflict with each other.

The controller may control the heating branch to exchange heat alone, the controller may control the cooling branch to exchange heat alone, the controller may control the first heat exchange component 21 in the first trunk line 10a to exchange heat alone, or the controller may control the second heat exchange component 22 in the second trunk line 10b to exchange heat alone.

Alternatively, the controller may control any combination of the cooling branch, the heating branch, the first trunk line 10a, and the second trunk line 10b to exchange heat simultaneously. The controller may control the battery heat exchange module to heat the battery while controlling the cooling branch to cool the passenger compartment. Alternatively, the controller may control the battery heat exchange module to cool the battery while controlling the cooling branch to cool the passenger compartment. The controller may control the battery heat exchange module to heat the battery while controlling the heating branch to heat the passenger compartment. Alternatively, the controller may control the battery heat exchange module to cool the battery while controlling the heating branch to heat the passenger compartment. The controller may control the heating branch to heat the passenger compartment while controlling the cooling branch to cool the passenger compartment. Alternatively, the passenger compartment may control the battery unit to exchange heat to the battery while controlling the cooling branch to cool the passenger compartment and controlling the heating branch to heat the passenger compartment.

The heating branch and the heating branch of the air conditioning circulation circuit 101 are respectively connected in parallel to the first trunk line 10a and the second trunk line 10b, and operate independently of each other. The thermal management system 100 can be controlled to implement different functions by arranging a control valve, and the different functions can be synchronously performed, so that the thermal management system 100 has strong functionality, and the working efficiency of the thermal management system 100 is improved.

In some embodiments of the present disclosure, the thermal management system 100 further includes: a storage device. The storage device is connected between an exhaust port of the compressor 11 and an air inlet of the compressor 11.

When the compressor 11 operates, a working medium flows in from the air inlet of the compressor 11. A low-temperature and low-pressure gaseous working medium is compressed by the compressor 11 and then becomes a high-temperature and high-pressure gaseous working medium, and flows out from the exhaust port of the compressor 11. The working medium may flow back to the compressor 11 again after performing heat exchange, to complete one cycle.

The storage device is connected between the exhaust port of the compressor 11 and the air inlet of the compressor 11, and the storage device is constructed to store the working medium and discharge the stored working medium. It may be understood that, states of matter of the working medium are different when heat exchange with the working medium is performed for heating and heat exchange with the working medium is performed for cooling. In addition, under the same mass, a volume of a gaseous working medium is greater than a volume of a liquid working medium, resulting in a difference between a working medium demand for heating and a working medium demand for cooling. The storage device may be arranged to store the working medium and discharge the stored working medium, so that the amount of the working medium can be increased or reduced according to the temperature of the battery.

It may be understood that the liquid working medium is more convenient to store. Therefore, in some embodiments of the present disclosure, the storage device is such constructed that the working medium can release heat and be liquefied in the storage device, and the storage device can store the liquid working medium. The storage device is connected between the exhaust port of the compressor 11 and the air inlet of the compressor 11. The working medium flowing out from the exhaust port of the compressor 11 may be liquefied by the storage device and then stored inside the storage device.

In some embodiments of the present disclosure, the controller controls, according to the temperature of the battery, the storage device to increase the working medium for the first trunk line 10a or/and the second trunk line 10b, or the controller may control, according to the temperature of the battery, the storage device to increase or reduce the working medium for the first trunk line 10a or/and the second trunk line 10b.

States of matter of the working medium are different when the working medium heats the battery and cools the battery. In addition, under the same mass, a volume of a gaseous working medium is greater than a volume of a liquid working medium. As a result, a working medium demand for heating the battery is higher than a working medium demand for cooling the battery. When the battery heat exchange module heats the battery, the controller controls the storage device to discharge the stored working medium to replenish the first trunk line 10a or/and the second trunk line 10b, to meet a working medium demand for heating the battery. When the battery heat exchange module cools the battery, the storage device stores the flowing working medium, to reduce the working medium amount in the first trunk line 10a or/and the second trunk line 10b, thereby meeting a working medium demand for cooling the battery.

In some embodiments of the present disclosure, the storage device is constructed as a liquid storage dryer, and the liquid storage dryer is constructed to store the liquid working medium and discharge the stored liquid working medium. The liquid storage dryer may further filter out moisture and impurities in the working medium, to avoid damaging or blocking a working medium pipeline, and extend service life of the working medium pipeline, so that the working medium flows smoothly.

In some embodiments of the present disclosure, the air conditioning circulation circuit 101 includes: a compressor 11, a sixth heat exchanger 12, and a seventh heat exchanger 13. The compressor 11 includes an air inlet and an exhaust port, and the exhaust port of the compressor 11, the sixth heat exchanger 12, the seventh heat exchanger 13, and the air inlet of the compressor 11 are sequentially connected.

When the air conditioning circulation circuit 101 operates, a working medium flows in from the air inlet of the compressor 11. A low-temperature and low-pressure gaseous working medium is compressed by the compressor 11 and then becomes a high-temperature and high-pressure gaseous working medium, and flows out from the exhaust port of the compressor 11. A first port of the sixth heat exchanger 12 is connected to the exhaust port of the compressor 11, a second port of the sixth heat exchanger 12 is connected to the seventh heat exchanger 13, and the seventh heat exchanger 13 is connected to the air inlet of the compressor 11. Therefore, the working medium flows out from the compressor 11, then flows through the sixth heat exchanger 12, then flows through the seventh heat exchanger 13, and finally returns to the compressor 11 after undergoing other heat exchange, to form a working medium circuit, and complete one cycle.

The heating branch includes the sixth heat exchanger 12, the first trunk line 10a is connected in parallel with the sixth heat exchanger 12, and the second trunk line 10b is connected in parallel with the sixth heat exchanger 12. The controller is configured to control the exhaust port of the compressor 11 to communicate with at least one of the sixth heat exchanger 12, the first trunk line 10a, and the second trunk line 10b, to implement heat exchange to the at least one of the sixth heat exchanger 12, the first trunk line 10a, and the second trunk line 10b.

The heating branch is connected in parallel to the first trunk line 10a, the heating branch is connected in parallel to the second trunk line 10b, the sixth heat exchanger 12 on the heating branch is connected in parallel to both the first heat exchange component 21 on the first trunk line 10a and the second heat exchange component 22 on the second trunk line 10b, and the sixth heat exchanger 12, the first heat exchange component 21, and the second heat exchange component 22 operate independently of each other.

The exhaust port of the compressor 11 is optionally connected to at least one of the heating branch, the first trunk line 10a, and the second trunk line 10b, and the working medium flowing out of the exhaust port of the compressor 11 is a high-temperature and high-pressure gaseous working medium. Therefore, when the exhaust port of the compressor 11 is connected to one of the heating branch, the first trunk line 10a, and the second trunk line 10b, the heating branch, the first trunk line 10a, and the second trunk line 10b perform heating.

The controller may control the exhaust port of the compressor 11 to communicate with the heating branch, to implement heat exchange to the sixth heat exchanger 12. The controller may further control the exhaust port of the compressor 11 to communicate with the first trunk line 10a, to control the first heat exchange component 21 to exchange heat. The controller may further control the exhaust port of the compressor 11 to communicate with the second trunk line 10b, to control the second heat exchange component 22 to exchange heat. The controller may further control the exhaust port of the compressor 11 to simultaneously communicate with any two or more of the heating branch, the first trunk line 10a, and the second trunk line 10b, to control the sixth heat exchanger 12, the first heat exchange component 21, or the second heat exchange component 22 to simultaneously exchange heat. The controller may control the battery heat exchange module to heat the battery while controlling the sixth heat exchanger 12 to heat the passenger compartment.

In some embodiments of the present disclosure, the air conditioning circulation circuit 101 includes: a compressor 11, a seventh heat exchanger 13, and an eighth heat exchanger 14. The compressor 11 includes an air inlet and an exhaust port, and the exhaust port of the compressor 11, the seventh heat exchanger 13, the eighth heat exchanger 14, and the air inlet of the compressor 11 are sequentially connected.

The cooling branch includes the eighth heat exchanger 14, the first trunk line 10a is connected in parallel to the eighth heat exchanger 14, and the second trunk line 10b is connected in parallel to the eighth heat exchanger 14. The controller is configured to control the seventh heat exchanger 13 to communicate with at least one of the eighth heat exchanger 14, the first trunk line 10a, and the second trunk line 10b, to implement heat exchange to the at least one of the eighth heat exchanger 14, the first trunk line 10a, and the second trunk line 10b.

When the air conditioning circulation circuit 101 operates, a working medium flows in from the air inlet of the compressor 11. A low-temperature and low-pressure gaseous working medium is compressed by the compressor 11 and then becomes a high-temperature and high-pressure gaseous working medium, and flows out from the exhaust port of the compressor 11. A first port of the seventh heat exchanger 13 is connected to the exhaust port of the compressor 11, a second port of the seventh heat exchanger 13 is connected to the eighth heat exchanger 14, and the eighth heat exchanger 14 is connected to the air inlet of the compressor 11. Therefore, the working medium flows out from the compressor 11, then flows through the seventh heat exchanger 13, and then flows through the eighth heat exchanger 14. The working medium releases heat and is liquefied in the seventh heat exchanger 13, then is throttled and depressurized, and then enters the eighth heat exchanger 14 to absorb heat and be vaporized, thereby performing cooling in the eighth heat exchanger 14. The gaseous working medium finally returns to the compressor 11, to form a working medium circuit, and complete one cycle.

The cooling branch is connected in parallel to the first trunk line 10a, the cooling branch is connected in parallel to the second trunk line 10b, the eighth heat exchanger 14 on the cooling branch is connected in parallel to both the first heat exchange component 21 on the first trunk line 10a and the second heat exchange component 22 on the second trunk line 10b, and the eighth heat exchanger 14, the first heat exchange component 21, and the second heat exchange component 22 operate independently of each other.

The controller may control the seventh heat exchanger 13 to communicate with the cooling branch, to implement heat exchange to the eighth heat exchanger 14. The controller may further control the seventh heat exchanger 13 to communicate with the first trunk line 10a, to control the first heat exchange component 21 to exchange heat. The controller may further control the seventh heat exchanger 13 to communicate with the second trunk line 10b, to control the second heat exchange component 22 to exchange heat. The controller may further control the seventh heat exchanger 13 to simultaneously communicate with any two or more of the cooling branch, the first trunk line 10a, and the second trunk line 10b, to control the eighth heat exchanger 14, the first heat exchange component 21, or the second heat exchange component 22 to simultaneously exchange heat. The controller may control the battery heat exchange module to cool the battery while controlling the eighth heat exchanger 14 to cool the passenger compartment.

In some embodiments of the present disclosure, the heat pump air conditioning circulation circuit 101 includes: a compressor 11, a sixth heat exchanger 12, a seventh heat exchanger 13, and an eighth heat exchanger 14. The compressor 11 includes an air inlet and an exhaust port, and the exhaust port of the compressor 11, the sixth heat exchanger 12, the seventh heat exchanger 13, the eighth heat exchanger 14, and the air inlet of the compressor 11 are sequentially connected.

When the air conditioning circulation circuit 101 operates, a working medium flows in from the air inlet of the compressor 11. A low-temperature and low-pressure gaseous working medium is compressed by the compressor 11 and then becomes a high-temperature and high-pressure gaseous working medium, and flows out from the exhaust port of the compressor 11. A first port of the sixth heat exchanger 12 is connected to the exhaust port of the compressor 11, a second port of the sixth heat exchanger 12 is connected to a first port of the seventh heat exchanger 13, a second port of the seventh heat exchanger 13 is connected to a first port of the eighth heat exchanger 14, and a second port of the eighth heat exchanger 14 is connected to the air inlet of the compressor 11. Therefore, the working medium flows out from the compressor 11, then flows through the sixth heat exchanger 12, then flows through the seventh heat exchanger 13, then flows through the eighth heat exchanger 14, and finally returns to the compressor 11, to form a working medium circuit, and complete one cycle. The working medium exchanges heat in at least one of the sixth heat exchanger 12, the seventh heat exchanger 13, and the eighth heat exchanger 14, and then a gaseous working medium is formed and returns to the air inlet of the compressor 11.

The heating branch includes the sixth heat exchanger 12, and the cooling branch includes the eighth heat exchanger 14. The first trunk line 10a is connected in parallel to the sixth heat exchanger 12, the second trunk line 10b is connected in parallel to the sixth heat exchanger 12, the first trunk line 10a is connected in parallel to the eighth heat exchanger 14, and the second trunk line 10b is connected in parallel to the eighth heat exchanger 14. The seventh heat exchanger 13 may be located in the heating branch, or the seventh heat exchanger 13 may be located in the cooling branch, or the seventh heat exchanger 13 may be used as only a pipeline for the working medium to pass through and the working medium neither absorbs heat nor releases heat in the seventh heat exchanger 13, which can be selected as required actually.

The heating branch is connected in parallel to the first trunk line 10a, the heating branch is connected in parallel to the second trunk line 10b, the sixth heat exchanger 12 on the heating branch is connected in parallel to both the first heat exchange component 21 on the first trunk line 10a and the second heat exchange component 22 on the second trunk line 10b, and the sixth heat exchanger 12, the first heat exchange component 21, and the second heat exchange component 22 operate independently of each other. The cooling branch is connected in parallel to the first trunk line 10a, the cooling branch is connected in parallel to the second trunk line 10b, the eighth heat exchanger 14 on the cooling branch is connected in parallel to both the first heat exchange component 21 on the first trunk line 10a and the second heat exchange component 22 on the second trunk line 10b, and the eighth heat exchanger 14, the first heat exchange component 21, and the second heat exchange component 22 operate independently of each other.

Because the heating branch is connected in parallel to the first trunk line 10a, and the heating branch is connected in parallel to the second trunk line 10b, the exhaust port of the compressor 11 is optionally connected to at least one of the heating branch, the first trunk line 10a, and the second trunk line 10b, and the at least one of the heating branch, the first trunk line 10a, and the second trunk line 10b exchanges heat. The working medium flowing out from the exhaust port of the compressor 11 is a high-temperature and high-pressure gaseous working medium. Therefore, when the exhaust port of the compressor 11 is connected to one of the heating branch, the first trunk line 10a, and the second trunk line 10b, at least one of the heating branch, the first trunk line 10a, and the second trunk line 10b performs heating.

Because the cooling branch is connected in parallel to the first trunk line 10a, and the cooling branch is connected in parallel to the second trunk line 10b, the air inlet of the compressor 11 is optionally connected to at least one of the cooling branch, the first trunk line 10a, and the second trunk line 10b. Similarly, the seventh heat exchanger 13 connected to the other side of the eighth heat exchanger 14 also optionally communicates with at least one of the heating branch, the first trunk line 10a, and the second trunk line 10b, and the at least one of the cooling refrigeration, the first trunk line 10a, and the second trunk line 10b exchanges heat. At least one of the cooling branch, the first trunk line 10a, and the second trunk line 10b performs cooling.

The controller is configured to control the exhaust port of the compressor 11 to communicate with at least one of the sixth heat exchanger 12, the first trunk line 10a, and the second trunk line 10b, to implement heat exchange to the at least one of the sixth heat exchanger 12, the first trunk line 10a, and the second trunk line 10b.

The controller may control the exhaust port of the compressor 11 to communicate with the heating branch, to implement heat exchange to the sixth heat exchanger 12. The controller may further control the exhaust port of the compressor 11 to communicate with the first trunk line 10a, to control the first heat exchange component 21 to exchange heat. The controller may further control the exhaust port of the compressor 11 to communicate with the second trunk line 10b, to control the second heat exchange component 22 to exchange heat. The controller may further control the exhaust port of the compressor 11 to simultaneously communicate with any two or more of the heating branch, the first trunk line 10a, and the second trunk line 10b, to control the sixth heat exchanger 12, the first heat exchange component 21, or the second heat exchange component 22 to simultaneously exchange heat. The controller may control the battery heat exchange module to heat the battery while controlling the sixth heat exchanger 12 to heat the passenger compartment.

Alternatively, the controller is configured to control the seventh heat exchanger 13 to communicate with at least one of the first trunk line 10a, the second trunk line 10b, and the eighth heat exchanger 14, to implement heat exchange to the at least one of the first trunk line 10a, the second trunk line 10b, and the eighth heat exchanger 14.

The controller may control the seventh heat exchanger 13 to communicate with the cooling branch, to implement heat exchange to the eighth heat exchanger 14. The controller may further control the seventh heat exchanger 13 to communicate with the first trunk line 10a, to control the first heat exchange component 21 to exchange heat. The controller may further control the seventh heat exchanger 13 to communicate with the second trunk line 10b, to control the second heat exchange component 22 to exchange heat. The controller may further control the seventh heat exchanger 13 to simultaneously communicate with any two or more of the heating branch, the first trunk line 10a, and the second trunk line 10b, to control the eighth heat exchanger 14, the first heat exchange component 21, or the second heat exchange component 22 to simultaneously exchange heat. The controller may control the battery heat exchange module to cool the battery while controlling the eighth heat exchanger 14 to cool the passenger compartment. The controller may control the battery heat exchange module to heat the battery while controlling the sixth heat exchanger 12 to cool the passenger compartment.

In some embodiments of the present disclosure, the sixth heat exchanger 12 is an in-vehicle condenser 120, and the in-vehicle condenser 120 is adapted to heat the passenger compartment. When the working medium flows in a working medium circuit jointly formed by the compressor 11 and the in-vehicle condenser 120, a high-temperature and high-pressure gaseous working medium flowing out from the exhaust port of the compressor 11 exchanges heat at the in-vehicle condenser 120, the working medium releases heat and is liquefied, and then after the working medium is throttled, is depressurized, absorbs heat, and is vaporized, the working medium finally becomes a low-temperature and low-pressure gaseous working medium to flow in from the air inlet of the compressor 11, to complete one cycle. Alternatively, the in-vehicle condenser 120 may function as only a pipeline, and the working medium flows through the in-vehicle condenser 120 without heat exchange.

In some embodiments of the present disclosure, in a working medium circuit jointly formed by the compressor 11, the in-vehicle condenser 120, and the seventh heat exchanger 13, a high-temperature and high-pressure gaseous working medium flowing out from the exhaust port of the compressor 11 exchanges heat at the in-vehicle condenser 120, the working medium releases heat and is liquefied, and the in-vehicle condenser 120 is adapted to heat the passenger compartment.

The controller may control the exhaust port of the compressor 11 to optionally communicate with at least one of the in-vehicle condenser 120, the first heat exchange component 21, and the second heat exchange component 22. By arranging the controller to change a flow line of the working medium in the air conditioning circulation circuit 101, the passenger compartment can be heated and/or the battery can be heated.

It may be understood that the air conditioning circulation circuit 101 has a plurality of branches as a whole, and a working medium circuit jointly formed by the compressor 11, the sixth heat exchanger 12, and the seventh heat exchanger 13, and the like are all part of the air conditioning circulation circuit 101.

In some embodiments of the present disclosure, the seventh heat exchanger 13 is an out-vehicle condenser 130. The working medium releases heat through the out-vehicle condenser 130, and the out-vehicle condenser 130 may perform heating. For example, in winter, when an ambient temperature is low, an element of the vehicle needs to be preheated and started. The element is heated by the out-vehicle condenser 130, so that a starting speed of the vehicle can be increased. Alternatively, the out-vehicle condenser 130 may function as only a pipeline, and the working medium flows through the out-vehicle condenser 130 without heat exchange.

In some embodiments of the present disclosure, the eighth heat exchanger 14 is an evaporator 140, and the evaporator 140 is adapted to cool the passenger compartment.

When the working medium flows in a working medium circuit jointly formed by the compressor 11 and the evaporator 140, a high-temperature and high-pressure gaseous working medium flowing out from the exhaust port of the compressor 11 exchanges heat in a pipeline first, the working medium releases heat and is liquefied, then the working medium is throttled and depressurized and enters the evaporator 140, the working medium absorbs heat and is vaporized at the evaporator 140, to cool the evaporator 140, and the working medium finally becomes a low-temperature and low-pressure gaseous working medium to flow in from the air inlet of the compressor 11, to complete one cycle.

In some embodiments of the present disclosure, in a working medium circuit jointly formed by the compressor 11, the seventh heat exchanger 13, and the evaporator 140, a high-temperature and high-pressure gaseous working medium flowing out from the exhaust port of the compressor 11 exchanges heat at the seventh heat exchanger 13, the working medium releases heat and is liquefied, then the working medium is throttled and depressurized and enters the evaporator 140, the working medium absorbs heat and is vaporized at the evaporator 140, to cool the passenger compartment, and then the working medium becomes a low-temperature and low-pressure gaseous working medium to flow in from the air inlet of the compressor 11, to complete one cycle.

The controller may control the seventh heat exchanger 13 to optionally communicate with at least one of the evaporator 140, the first heat exchange component 21, and the second heat exchange component 22. By arranging the controller to change a flow path of the working medium in the air conditioning circulation circuit 101, the passenger compartment can be cooled and/or the battery can be cooled.

In some embodiments of the present disclosure, in a working medium circuit jointly formed by the compressor 11, the in-vehicle condenser 120, the out-vehicle condenser 130, and the evaporator 140, a high-temperature and high-pressure gaseous working medium flowing out from the exhaust port of the compressor 11 exchanges heat at the in-vehicle condenser 120, the working medium releases heat and is liquefied, and the in-vehicle condenser 120 is adapted to heat the passenger compartment. Alternatively, the in-vehicle condenser 120 may be used as only a flow channel, and the working medium flows through the in-vehicle condenser 120 without heat exchange. Then, the working medium continues to flow toward the out-vehicle condenser 130, and the working medium may perform heat exchange at the out-vehicle condenser 130, to release heat for the second time. Alternatively, the working medium may pass only through the out-vehicle condenser 130, and perform no heat exchange at the out-vehicle condenser 130. After releasing heat and being liquefied, the working medium is throttled and depressurized and enters the evaporator 140, the working medium absorbs heat and is vaporized at the evaporator 140, to cool the passenger compartment, and then the working medium becomes a low-temperature and low-pressure gaseous working medium to flow in from the air inlet of the compressor 11, to complete one cycle.

The controller may control the exhaust port of the compressor 11 to optionally communicate with at least one of the in-vehicle condenser 120, the first heat exchange component 21, and the second heat exchange component 22. In addition, the controller may further control the seventh heat exchanger 13 to optionally communicate with at least one of the evaporator 140, the first heat exchange component 21, and the second heat exchange component 22. By arranging the controller to change a flow path of the working medium in the air conditioning circulation circuit 101, the thermal management system 100 is allowed to operate in different working conditions. The thermal management system 100 in the present disclosure has strong functionality.

When the controller controls the exhaust port of the compressor 11 to communicate with the in-vehicle condenser 120, the controller controls the out-vehicle condenser 130 to communicate with the evaporator 140, and the controller controls the exhaust port of the compressor 11 not to communicate with the first trunk line 10a and the second trunk line 10b, the working medium passes through the in-vehicle condenser 120 without heat exchange, the working medium passes through the out-vehicle condenser 130 to release heat, and the working medium passes through the evaporator 140 to absorb heat, so that the thermal management system 100 can achieve a working condition of independently cooling the passenger compartment.

When the controller controls the exhaust port of the compressor 11 to communicate with the in-vehicle condenser 120, the controller controls the out-vehicle condenser 130 to communicate with the first trunk line 10a and the second trunk line 10b, and the controller controls the exhaust port of the compressor 11 not to communicate with the first trunk line 10a and the second trunk line 10b and controls the out-vehicle condenser 130 not to communicate with the evaporator 140, the working medium passes through the in-vehicle condenser 120 without heat exchange, the working medium passes through the out-vehicle condenser 130 to release heat, and the working medium passes through the first heat exchange component 21 and/or the second heat exchange component 22 to absorb heat, so that the thermal management system 100 can achieve a working condition of cooling the battery.

When the controller controls the exhaust port of the compressor 11 to communicate with the in-vehicle condenser 120, the controller controls the out-vehicle condenser 130 to communicate with the first trunk line 10a and the second trunk line 10b and controls the out-vehicle condenser 130 to communicate with the evaporator 140, and the controller controls the exhaust port of the compressor 11 to communicate with neither the first trunk line 10a nor the second trunk line 10b, the working medium passes through the in-vehicle condenser 120 without heat exchange, the working medium passes through the out-vehicle condenser 130 to release heat, the working medium passes through the first heat exchange component 21 and/or the second heat exchange component 22 to absorb heat, and the working medium passes through the evaporator 140 to absorb heat, so that the thermal management system 100 can achieve a working condition of cooling the battery while cooling the passenger compartment.

When the controller controls the exhaust port of the compressor 11 to communicate with the in-vehicle condenser 120, and the controller controls the exhaust port of the compressor 11 not to communicate with the first trunk line 10a and the second trunk line 10b, the working medium passes through the in-vehicle condenser 120 to release heat, so that the thermal management system 100 can achieve a working condition of heating the passenger compartment.

When the controller controls the exhaust port of the compressor 11 to communicate with the first trunk line 10a and the second trunk line 10b, and the controller controls the exhaust port of the compressor 11 not to communicate with the in-vehicle condenser 120, the working medium passes through the first heat exchange component 21 and/or the second heat exchange component 22 to release heat, so that the thermal management system 100 can achieve a working condition of heating the battery.

When the controller controls the exhaust port of the compressor 11 to communicate with the in-vehicle condenser 120, and the controller controls the exhaust port of the compressor 11 to communicate with the first trunk line 10a and the second trunk line 10b, the working medium passes through the in-vehicle condenser 120 to release heat, and the working medium passes through the first heat exchange component 21 and/or the second heat exchange component 22 to release heat, so that the thermal management system 100 can achieve a working condition of heating both the passenger compartment and the battery.

In some embodiments of the present disclosure, the thermal management system 100 includes a first exhaust flow channel 10c. The battery heat exchange module is connected to the air inlet through the first exhaust flow channel 10c, and the working medium flowing through the battery heat exchange module may flow back to the air inlet through the first exhaust flow channel 10c. For example, when the battery is cooled, the working medium flows out from the exhaust port, passes through the out-vehicle condenser 130 to release heat, then absorbs heat at the battery heat exchange module, and then flows back to the air inlet through the first exhaust flow channel 10c.

The thermal management system 100 further includes a second exhaust flow channel 10d connected to the exhaust port. The second exhaust flow channel 10d is connected to the first exhaust flow channel 10c. Therefore, the battery heat exchange module is connected to the exhaust port through the second exhaust flow channel 10d, and the working medium may flow to the battery heat exchange module through the second exhaust flow channel 10d. For example, when the battery is heated, the working medium flows out from the exhaust port, flows to the battery heat exchange module through the second heat exchange flow channel, and releases heat at the battery heat exchange module.

The thermal management system 100 further includes a third exhaust flow channel 10e enabling the exhaust port to communicate with the in-vehicle condenser 120. The working medium may flow to the out-vehicle condenser 130 through the third exhaust flow channel 10e, and release heat at the in-vehicle condenser 120.

In some embodiments of the present disclosure, the controller includes a plurality of control valve groups, and the control valve groups operate to enable the exhaust port to communicate with at least one of the in-vehicle condenser 120 and the battery heat exchange module, to cause the working medium of the exhaust port to flow to the in-vehicle condenser 120 or the battery heat exchange module. The flow direction of the working medium may be controlled by arranging the control valve group, to control the working of the thermal management system 100.

In some embodiments of the present disclosure, the control valve group includes a first on-off valve 51, a second on-off valve 52, and a third on-off valve 53. The first on-off valve 51 is connected in series to the second exhaust flow channel 10d, and the third on-off valve 53 is connected between the out-vehicle condenser 130 and the exhaust port, that is, the third on-off valve 53 is connected in series to the third exhaust flow channel 10e. The second on-off valve 52 is connected in series to the first exhaust flow channel 10c. When the second on-off valve 52 is closed, the working medium of the second exhaust flow channel 10d is prevented from flowing to an air return port.

The first on-off valve 51 may control on-off of the second exhaust flow channel 10d, to control whether the working medium flows to the battery heat exchange module from the exhaust port. When the first on-off valve 51 is closed, the working medium is prevented from flowing to the battery heat exchange module. The third on-off valve 53 may control on-off of the third flow channel, to control whether the working medium flows from the exhaust port to the out-vehicle condenser 130. When the third on-off valve 53 is closed, the working medium is prevented from flowing to the out-vehicle condenser 130.

The first exhaust flow channel 10c is connected to the air return port, the second exhaust flow channel 10d is connected to the exhaust port, and the second exhaust flow channel 10d is connected to the first exhaust flow channel 10c. When the first on-off valve 51 controls the second exhaust flow channel 10d to enable circulation, the working medium flowing out from the exhaust port flows from the second exhaust flow channel 10d to the first exhaust flow channel 10c, and then directly flows back to the air return port. Therefore, by arranging the second on-off valve 52 at the first exhaust flow channel 10c, the second on-off valve 52 can control on-off of the first exhaust flow channel 10c. When the second on-off valve 52 is closed, the working medium of the second exhaust flow channel 10d is prevented from flowing to the air inlet.

In some embodiments of the present disclosure, a fourth electronic expansion valve 64 is further included, and the fourth electronic expansion valve 64 is connected in parallel to the third on-off valve 53.

In some embodiments of the present disclosure, the thermal management system 100 further includes a first switch valve 41 and a second switch valve 42. The first switch valve 41 is connected in series between the second end of the battery heat exchange module and the eighth heat exchanger 14, and the second switch valve 42 is connected in series between the second end of the battery heat exchange module and the seventh heat exchanger 13. The first switch valve 41 may control on-off between the battery heat exchange module and the eighth heat exchanger 14, and the second switch valve 42 may control on-off between the battery heat exchange module and the seventh heat exchanger 13. When one of the first switch valve 41 and the second switch valve 42 is turned on, the first trunk line 10a is connected in parallel to the sixth heat exchanger 12, the second trunk line 10b is connected in parallel to the sixth heat exchanger 12, the first trunk line 10a is connected in parallel to the eighth heat exchanger 14, and the second trunk line 10b is connected in parallel to the eighth heat exchanger 14.

In some embodiments of the present disclosure, the first switch valve 41 is constructed as a first one-way valve 41, and the first one-way valve 41 is such constructed that the working medium flows from the battery heat exchange module to the eighth heat exchanger 14. The first one-way valve 41 may control the working medium to flow from the battery heat exchange module to the eighth heat exchanger 14 stably, to improve flowability of the working medium, avoid reverse flow of the working medium, and improve working stability of the thermal management system 100. In addition, the first one-way valve 41 can operate stably and continuously, so that active control can be reduced, and manipulation can be facilitated.

In some embodiments of the present disclosure, the second switch valve 42 is constructed as a second one-way valve 42, and the second one-way valve 42 is such constructed that the working medium flows from the seventh heat exchanger 13 to the battery heat exchange module. The second one-way valve 42 may control the working medium to flow from the seventh heat exchanger 13 to the battery heat exchange module stably, to improve flowability of the working medium, avoid reverse flow of the working medium, and improve working stability of the thermal management system 100. In addition, the second one-way valve 42 can operate stably and continuously, so that active control can be reduced, and manipulation can be facilitated.

In some embodiments of the present disclosure, a first sensor 31 and a second sensor 32 are arranged in the first trunk line 10a, the first sensor 31 is located at the first end of the first heat exchange component 21, and the second sensor 32 is located at the second end of the first heat exchange component 21. A third sensor 33 and a fourth sensor 34 are further arranged in the second trunk line 10b. The third sensor 33 is located at the first end of the second heat exchange component 22, and the fourth sensor 34 is located at the second end of the second heat exchange component 22.

By arranging the sensors, various values of the working medium in the first trunk line 10a and various values of the working medium in the second trunk line 10b can be visually and accurately obtained. The controller may control flow conditions of the working medium in the first trunk line 10a and the second trunk line 10b according to the temperature of the battery, which not only facilitates operation, but also enables the battery to quickly reach a proper working temperature, thereby improving working stability of the battery.

In some embodiments of the present disclosure, the first sensor 31 is constructed as a pressure sensor, and the first sensor 31 may obtain a pressure of the working medium in the first trunk line 10a. The second sensor 32 is constructed as a temperature sensor, and the second sensor 32 may obtain a temperature of the working medium in the first trunk line 10a. The third sensor 33 is constructed as a pressure sensor, and the third sensor 33 may obtain a pressure of the working medium in the second trunk line 10b. The fourth sensor 34 is constructed as a temperature sensor, and the fourth sensor 34 may obtain a temperature of the working medium in the second trunk line 10b.

In some embodiments of the present disclosure, the first trunk line 10a is provided with a first sensor 31, a second sensor 32, and a first flow regulating element. The first sensor 31 is located at the first end of the first heat exchange component 21, the first flow regulating element is located at the second end of the first heat exchange component 21, and the second sensor 32 is arranged between the second end of the first heat exchange component 21 and the first flow regulating element. The second trunk line 10b is further provided with a third sensor 33, a fourth sensor 34, and a second flow regulating element. The third sensor 33 is located at the first end of the second heat exchange component 22, the second flow regulating element is located at the second end of the second heat exchange component 22, and the fourth sensor 34 is arranged between the second end of the second heat exchange component 22 and the second flow regulating element.

In some embodiments of the present disclosure, the first sensor 31 is constructed as a pressure sensor, and the first sensor 31 may obtain a pressure of the working medium in the first trunk line 10a. The second sensor 32 is constructed as a temperature sensor, and the second sensor 32 may obtain a temperature of the working medium in the first trunk line 10a. The third sensor 33 is constructed as a pressure sensor, and the third sensor 33 may obtain a pressure of the working medium in the second trunk line 10b. The fourth sensor 34 is constructed as a temperature sensor, and the fourth sensor 34 may obtain a temperature of the working medium in the second trunk line 10b.

The first flow regulating element may regulate the flow of the working medium in the first trunk line 10a, thereby regulating the pressure in the first trunk line 10a, and playing a role in throttling and depressurization. The third flow regulating element may regulate the flow of the working medium in the second trunk line 10b, thereby regulating the pressure in the second trunk line 10b, and playing a role in throttling and depressurization. The pressures of the working medium in the first trunk line 10a and the second trunk line 10b are kept within a safety range, to prevent the pressures of the working medium in the first trunk line 10a and the second trunk line 10b from being excessively large to break through the pipeline and damage the battery, thereby improving the working stability of the battery.

When the working medium flows in the working medium circuit jointly formed by the compressor 11, the in-vehicle condenser 120, the out-vehicle condenser 130, and the battery heat exchange module, the working medium releases heat at the in-vehicle condenser 120 or the out-vehicle condenser 130, then is throttled and depressurized by the first flow regulating element and/or the second flow regulating element, and then becomes a low-temperature and low-pressure liquid working medium. After evaporating and absorbing heat at the battery heat exchange module, the working medium becomes a low-temperature and low-pressure gaseous working medium, and the low-temperature and low-pressure gaseous working medium flows into the compressor 11 from the air inlet, to complete one cycle.

In some embodiments of the present disclosure, the heat exchange element further includes a third switch valve and a fourth switch valve. The third switch valve is arranged on the first trunk line 10a, and the fourth switch valve is arranged on the second trunk line 10b.

The third switch valve may control on-off of the first trunk line 10a, and the fourth switch valve may control on-off of the second trunk line 10b, to control flow or stagnation of the working medium in the first trunk line 10a or the second trunk line 10b. The third switch valve and the fourth switch valve operate independently of each other.

When the third switch valve is turned on, the first trunk line 10a is connected in parallel to the eighth heat exchanger 14, and the first trunk line 10a is optionally connected in parallel to the sixth heat exchanger 12. When the fourth switch valve is turned on, the second trunk line 10b is connected in parallel to the eighth heat exchanger 14, and the second trunk line 10b is optionally connected in parallel to the sixth heat exchanger 12.

In some embodiments of the present disclosure, a first electronic expansion valve 61 is arranged in the first trunk line 10a, and a second electronic expansion valve 62 is arranged in the second trunk line 10b. The first sensor 31 is located at the first end of the first heat exchange component 21, the first electronic expansion valve 61 is located at the second end of the first heat exchange component 21, and the second sensor 32 is arranged between the second end of the first heat exchange component 21 and the first electronic expansion valve 61. The third sensor 33 is located at the first end of the second heat exchange component 22, the second electronic expansion valve 62 is located at the second end of the second heat exchange component 22, and the fourth sensor 34 is arranged between the second end of the second heat exchange component 22 and the second electronic expansion valve 62.

The electronic expansion valve has a flow regulating function, and the electronic expansion valve may depressurize the working medium flowing through the electronic expansion valve. The electronic expansion valve further has an on-off function, and further optionally closes the pipeline, to control flow or stagnation of the working medium in the pipeline in which the electronic expansion valve is located. Therefore, by arranging the first electronic expansion valve 61 on the first trunk line 10a, the first flow regulating element and the third switch valve can be removed. Similarly, by arranging the second electronic expansion valve 62 on the second trunk line 10b, the second flow regulating element and the fourth switch valve can be removed, thereby reducing the quantity of elements, and reducing arrangement difficulty.

In some embodiments of the present disclosure, a fifth switch valve is arranged at the first end of the evaporator 140, and the fifth switch valve is connected in series between the evaporator 140 and the air inlet of the compressor 11. The fifth switch valve may control on-off of a pipeline in which the evaporator 140 is located. When the fifth switch valve is turned on, the working medium may flow to the compressor 11 through the evaporator 140.

In some embodiments of the present disclosure, the fifth switch valve is constructed as a third one-way valve 43, and the third one-way valve 43 is such constructed that the working medium flows from the evaporator 140 to the compressor 11. The third one-way valve 43 may control the working medium to flow from the evaporator 140 to the compressor 11 stably, to improve flowability of the working medium, avoid reverse flow of the working medium, and improve working stability of the thermal management system 100. In addition, the third one-way valve 43 can operate stably and continuously, so that active control can be reduced, and manipulation can be facilitated.

In some embodiments of the present disclosure, a third electronic expansion valve 63 is arranged at the second end of the evaporator 140, and the third electronic expansion valve 63 is connected in series between the out-vehicle condenser 130 and the evaporator 140. The electronic expansion valve has a flow regulating function, and the third electronic expansion valve 63 may depressurize the working medium flowing through the third electronic expansion valve. The electronic expansion valve further has an on-off function, and further optionally closes the pipeline, to control whether the working medium flows to the evaporator 140.

When the working medium flows in the working medium circuit jointly formed by the compressor 11, the in-vehicle condenser 120, the out-vehicle condenser 130, and the evaporator 140, the working medium releases heat at the in-vehicle condenser 120 or the out-vehicle condenser 130, then is throttled and depressurized by the third electronic expansion valve 63, and then becomes a low-temperature and low-pressure liquid working medium. After evaporating and absorbing heat at the evaporator 140, the working medium becomes a low-temperature and low-pressure gaseous working medium, and the low-temperature and low-pressure gaseous working medium flows into the compressor 11 from the air inlet, to complete one cycle.

In some embodiments of the present disclosure, the thermal management system 100 further includes a bypass flow path 10f, a fourth on-off valve 54 is connected in series in the bypass flow path 10f, and the bypass flow path 10f is connected in parallel to the fifth switch valve, the evaporator 140, and the third electronic expansion valve 63 that are connected in series. The fourth on-off valve 54 may control continuity and isolation of the bypass flow path 10f. When the fourth on-off valve 54 unblocks the bypass flow path 10f, the working medium flows back to the air inlet through the bypass flow path 10f. When the fourth on-off valve 54 blocks the bypass flow path 10f, the working medium returns to the air inlet through the flow path in which the evaporator 140 is located.

In some embodiments of the present disclosure, a fifth on-off valve 55 is arranged at the first end of the out-vehicle condenser 130, and the fifth on-off valve 55 is connected in series between the out-vehicle condenser 130 and the exhaust port of the compressor 11. When the fifth on-off valve 55 is turned on, the working medium may flow to the out-vehicle condenser 130.

In some embodiments of the present disclosure, a fourth one-way valve 44 is arranged at the second end of the out-vehicle condenser 130. The fourth one-way valve 44 is such constructed that the working medium flow out from the out-vehicle condenser 130, to improve flowability of the working medium and avoid reverse flow of the working medium.

In some embodiments of the present disclosure, the thermal management system 100 further includes a sixth on-off valve 56, and the sixth on-off valve 56 is arranged on a side of the first switch valve 41 away from the battery heat exchange module. When the sixth on-off valve 56 is turned on, the working medium may flow from the battery heat exchange module to the evaporator 140.

In some embodiments of the present disclosure, the thermal management system 100 further includes a fifth one-way valve 45. The fifth one-way valve 45 is arranged between the battery heat exchange module and the air inlet of the compressor 11. The fifth one-way valve 45 is such constructed that the working medium flows from the battery heat exchange module to the air inlet of the compressor 11, to prevent the working medium flowing to the air inlet from flowing to a heat exchange component, thereby improving use safety of the heat exchange component.

In some embodiments of the present disclosure, the thermal management system 100 further includes a gas-liquid separator 15, and the gas-liquid separator 15 communicates with the air inlet of the compressor 11. After being throttled and evaporated, the working medium becomes a low-temperature and low-pressure gaseous working medium. Evaporation and heat absorption cannot completely ensure that the working medium is completely converted into a gaseous working medium. Therefore, before flowing into the compressor 11 again, the working medium needs to first flow into the gas-liquid separator 15. The gas-liquid separator 15 separates the gaseous working medium from the liquid working medium, and drives only the low-temperature and low-pressure gaseous working medium to flow to the compressor 11, to prevent liquid slugging of liquid drops on a functional member in the compressor 11, and ensure safe and normal operation of the compressor 11.

In some embodiments of the present disclosure, the thermal management system 100 further includes a series branch 10g. One end of the series branch 10g is connected to the first trunk line 10a, and the other end of the series branch 10g is connected to the second trunk line 10b. The controller is further configured to control, according to the temperature of the battery, the series branch 10g to connect the first trunk line 10a to the second trunk line 10b in series, so that the first trunk line 10a and the second trunk line 10b exchange heat simultaneously.

In some embodiments of the present disclosure, a first interface of the first heat exchange component 21 is connected to a second interface of the second heat exchange component 22 through the series branch 10g. The working medium flows in from a second port of the first heat exchange component 21, then flows through the first heat exchange component 21, then flows to the second heat exchange component 22 through the series branch 10g, and finally flows out from a first port of the second heat exchange component 22.

In some embodiments of the present disclosure, the series branch 10g includes a series switch valve 57. The first interface of the first heat exchange component 21 is connected to the second interface of the second heat exchange component 22 through the series switch valve 57. The series switch valve 57 may control on-off of the series branch 10g. When the series switch valve 57 closes the series branch 10g, the first trunk line 10a and the second trunk line 10b are connected in parallel. When the series switch valve 57 opens the series branch 10g, the first trunk line 10a and the second trunk line 10b may be connected in series.

In some embodiments of the present disclosure, the first sensor 31 is arranged between one end of the series branch 10g and the first interface of the first heat exchange component 21, and the third sensor 33 is arranged between the other end of the series branch 10g and the second interface of the second heat exchange component 22. When the first heat exchange component 21 and the second heat exchange component 22 are connected in series, each of the first sensor 31, the second sensor 32, the third sensor 33, and the fourth sensor 34 may detect information about the working medium.

In some embodiments of the present disclosure, the thermal management system 100 further includes a parallel switch valve 58. The parallel switch valve 58 is arranged on one side of the first interface of the first heat exchange component 21 and one side of the first interface of the second heat exchange component 22. The parallel switch valve 58 may control on-off of the first trunk line 10a and the second trunk line 10b. When the parallel switch valve 58 is turned on, the first trunk line 10a and the second trunk line 10b may be connected in parallel.

In some embodiments of the present disclosure, the first heat exchange component 21 is arranged on a side of the battery, and the second heat exchange component 22 is arranged on another side of the battery, to perform heat exchange to different sides of the battery, thereby improving heat exchange efficiency for the battery.

In some embodiments of the present disclosure, the first heat exchange component 21 is a first heat exchange plate, the second heat exchange component 22 is a second heat exchange plate, and the first heat exchange plate and the second heat exchange plate are arranged on two opposite sides of the battery. Compared with a design manner in which one heat exchange plate is arranged, the first heat exchange plate and the second heat exchange plate can cool or heat two opposite sides of the battery, which can improve efficiency of cooling or heating the battery, enable the battery to quickly reach a proper working temperature, and improve working stability of the battery.

In some embodiments of the present disclosure, at least one of the first heat exchange component 21 and the second heat exchange component 22 includes a plurality of heat exchange components, and the plurality of heat exchange components are connected in parallel. By arranging a plurality of heat exchange components, the area for exchanging heat with the battery can be increased, thereby further improving heat exchange efficiency for the battery.

In some embodiments of the present disclosure, one heat exchange component is arranged in an electrode heating region of the battery, and one heat exchange component is arranged in a non-electrode heating region of the battery.

The controller may control, according to the temperature of the battery, the heat exchange component arranged in the electrode heating region of the battery to perform cooling to a large extent, and the heat exchange component arranged in the non-electrode heating region of the battery to perform cooling to a small extent. Alternatively, the controller may control, according to the temperature of the battery, the heat exchange component arranged in the electrode heating region of the battery to perform cooling, and the heat exchange component arranged in the non-electrode heating region of the battery to perform heating.

The following describes an embodiment in which the thermal management system 100 operates in different working conditions with reference to FIG. 1.

Embodiment 1 is a working condition in which only the passenger compartment is cooled.

In the working condition in which only the passenger compartment is cooled, the working medium flows in a working medium circuit formed by the compressor 11, the in-vehicle condenser 120, the out-vehicle condenser 130, and the evaporator 140. In this case, the first on-off valve 51 blocks the second exhaust flow channel 10d, the second on-off valve 52 blocks the first exhaust flow channel 10c, the third on-off valve 53 unblocks the third flow channel, the fourth on-off valve 54 blocks the bypass flow path 10f, the fifth on-off valve 55 unblocks the pipeline, and the sixth on-off valve 56 blocks the pipeline. The first electronic expansion valve 61 and the second electronic expansion valve 62 block the pipeline, the third electronic expansion valve 63 unblocks the pipeline to play a throttling role, and the fourth electronic expansion valve 64 blocks the pipeline.

A circulation path of the working medium is sequentially as follows: the working medium flows out from the compressor 11, passes through the first pressure sensor 81, the first temperature sensor 82, the in-vehicle condenser 120, the third on-off valve 53, the fifth on-off valve 55, the out-vehicle condenser 130, the fourth one-way valve 44, the third electronic expansion valve 63, the evaporator 140, the third one-way valve 43, the fifth sensor 35, and the gas-liquid separator 15, and finally flows back to the compressor 11.

The high-temperature and high-pressure gaseous working medium flows out from the exhaust port of the compressor 11, and flows to the in-vehicle condenser 120 through the third flow channel. The in-vehicle condenser 120 only functions as a pipeline, and the working medium continues to flow to the out-vehicle condenser 130. The working medium is liquefied and releases heat at the out-vehicle condenser 130. Then, the working medium is throttled and depressurized by the third electronic expansion valve 63, and then flows to the evaporator 140. The working medium absorbs heat and is vaporized at the evaporator 140, and finally becomes the low-temperature and low-pressure gaseous working medium and flows in from the air inlet of the compressor 11, so that the evaporator 140 cools the passenger compartment.

Embodiment 2 is a working condition in which only the battery is cooled, and the first heat exchange component 21 and the second heat exchange component 22 operate separately. If the first heat exchange component 21 operates, the second heat exchange component 22 does not operate.

In the working condition in which only the battery is cooled, the working medium flows in a working medium circuit formed by the compressor 11, the in-vehicle condenser 120, the out-vehicle condenser 130, and the first heat exchange component 21. In this case, the first on-off valve 51 blocks the second exhaust flow channel 10d, the second on-off valve 52 unblocks the first exhaust flow channel 10c, the third on-off valve 53 unblocks the third flow channel, the fourth on-off valve 54 blocks the bypass flow path 10f, the fifth on-off valve 55 unblocks the pipeline, and the sixth on-off valve 56 blocks the pipeline. The first electronic expansion valve 61 unblocks the pipeline to play a throttling role, the second electronic expansion valve 62 blocks the pipeline, the third electronic expansion valve 63 blocks the pipeline, and the fourth electronic expansion valve 64 blocks the pipeline. The parallel switch valve 58 unblocks the pipeline, and the switch valve 57 blocks the series branch 10g.

A circulation path of the working medium is sequentially as follows: the working medium flows out from the compressor 11, and flows to the first branch through the first pressure sensor 81, the first temperature sensor 82, the in-vehicle condenser 120, the third on-off valve 53, the fifth on-off valve 55, the out-vehicle condenser 130, the fourth one-way valve 44, and the second one-way valve 42, and the working medium flowing to the first branch flows through the first electronic expansion valve 61, the second sensor 32, the first heat exchange component 21, the first sensor 31, the parallel switch valve 58, the second on-off valve 52, the fifth one-way valve 45, and the gas-liquid separator 15, and finally flows back to the compressor 11.

The high-temperature and high-pressure gaseous working medium flows out from the exhaust port of the compressor 11, and flows to the in-vehicle condenser 120 through the third flow channel. The in-vehicle condenser 120 only functions as a pipeline, and the working medium continues to flow to the out-vehicle condenser 130. The working medium is liquefied and releases heat at the out-vehicle condenser 130. Then, the working medium is throttled and depressurized by the first electronic expansion valve 61, and then flows to the first heat exchange component 21. The working medium absorbs heat and is vaporized at the first heat exchange component 21, and becomes the low-temperature and low-pressure gaseous working medium and flows in from the air inlet of the compressor 11, so that the first heat exchange plate cools the battery.

Embodiment 3 is a working condition in which only the battery is cooled, and the first heat exchange component 21 and the second heat exchange component 22 operate in parallel.

In the working condition in which only the battery is cooled, the working medium flows in a working medium circuit formed by the compressor 11, the in-vehicle condenser 120, the out-vehicle condenser 130, and the battery heat exchange module. In this case, the first on-off valve 51 blocks the second exhaust flow channel 10d, the second on-off valve 52 unblocks the first exhaust flow channel 10c, the third on-off valve 53 unblocks the third flow channel, the fourth on-off valve 54 blocks the bypass flow path 10f, the fifth on-off valve 55 unblocks the pipeline, and the sixth on-off valve 56 blocks the pipeline. The first electronic expansion valve 61 and the second electronic expansion valve 62 unblocks the pipeline to play a throttling role, the third electronic expansion valve 63 blocks the pipeline, and the fourth electronic expansion valve 64 blocks the pipeline. The parallel switch valve 58 unblocks the pipeline, and the switch valve 57 blocks the series branch 10g.

A circulation path of the working medium is sequentially as follows: the working medium flows out of the compressor 11, and flows to the first branch and the second branch through the first pressure sensor 81, the first temperature sensor 82, the in-vehicle condenser 120, the third on-off valve 53, the fifth on-off valve 55, the out-vehicle condenser 130, the fourth one-way valve 44, and the second one-way valve 42, the working medium flowing to the first branch passes through the first electronic expansion valve 61, the second sensor 32, the first heat exchange component 21, the first sensor 31, and the parallel switch valve 58, and the working medium flowing to the second branch flows out of the second branch after passing through the second electronic expansion valve 62, the fourth sensor 34, the second heat exchange component 22, and the third sensor 33, then is mixed with the working medium flowing out of the first branch, then passes through the second on-off valve 52, the fifth one-way valve 45, and the gas-liquid separator 15, and finally flows back to the compressor 11.

The high-temperature and high-pressure gaseous working medium flows out from the exhaust port of the compressor 11, and flows to the in-vehicle condenser 120 through the third flow channel. The in-vehicle condenser 120 only functions as a pipeline, and the working medium continues to flow to the out-vehicle condenser 130. The working medium is liquefied and releases heat at the out-vehicle condenser 130. Then, the working medium is throttled and depressurized by the first electronic expansion valve 61 and the second electronic expansion valve 62, and then flows to the first heat exchange component 21 and the second heat exchange component 22. The working medium absorbs heat and is vaporized at the first heat exchange component 21 and the second heat exchange component 22 separately, and becomes the low-temperature and low-pressure gaseous working medium and flows in from the air inlet of the compressor 11, so that the first heat exchange plate and the second heat exchange plate cool the battery.

Embodiment 4 is a working condition in which only the battery is cooled, and the first heat exchange component 21 and the second heat exchange component 22 operate in series.

In the working condition in which only the battery is cooled, the working medium flows in a working medium circuit formed by the compressor 11, the in-vehicle condenser 120, the out-vehicle condenser 130, and the battery heat exchange module. In this case, the first on-off valve 51 blocks the second exhaust flow channel 10d, the second on-off valve 52 unblocks the first exhaust flow channel 10c, the third on-off valve 53 unblocks the third flow channel, the fourth on-off valve 54 blocks the bypass flow path 10f, the fifth on-off valve 55 unblocks the pipeline, and the sixth on-off valve 56 blocks the pipeline. The first electronic expansion valve 61 and the second electronic expansion valve 62 unblocks the pipeline to play a throttling role, the third electronic expansion valve 63 blocks the pipeline, and the fourth electronic expansion valve 64 blocks the pipeline. The parallel switch valve 58 blocks the pipeline, and the switch valve 57 unblocks the series branch 10g.

A circulation path of the working medium is sequentially as follows: the working medium flows out from the compressor 11, passes through the first pressure sensor 81, the first temperature sensor 82, the in-vehicle condenser 120, the third on-off valve 53, the fifth on-off valve 55, the out-vehicle condenser 130, the fourth one-way valve 44, the second one-way valve 42, the first electronic expansion valve 61, the second sensor 32, the first heat exchange component 21, the first sensor 31, the switch valve 57, the fourth sensor 34, the second heat exchange component 22, the third sensor 33, the second on-off valve 52, the fifth one-way valve 45, and the gas-liquid separator 15, and finally flows back to the compressor 11.

The high-temperature and high-pressure gaseous working medium flows out from the exhaust port of the compressor 11, and flows to the in-vehicle condenser 120 through the third flow channel. The in-vehicle condenser 120 only functions as a pipeline, and the working medium continues to flow to the out-vehicle condenser 130. The working medium is liquefied and releases heat at the out-vehicle condenser 130. Then, the working medium is throttled and depressurized by the first electronic expansion valve 61, and then flows to the first heat exchange component 21 and the second heat exchange component 22. The working medium absorbs heat and is vaporized at the first heat exchange component 21 and the second heat exchange component 22, and becomes the low-temperature and low-pressure gaseous working medium and flows in from the air inlet of the compressor 11, so that the first heat exchange plate and the second heat exchange plate cool the battery.

Embodiment 5 is a working condition in which the passenger compartment is cooled and the battery is cooled, and Embodiment 5 is actually a case that Embodiment 1 operates simultaneously with any one of Embodiment 2 to Embodiment 4.

Embodiment 6 is a working condition in which only the passenger compartment is heated. In addition, an environment outside the vehicle is high, so that the out-vehicle condenser 130 can absorb heat from the environment outside the vehicle.

In the working condition in which only the passenger compartment is heated, the working medium flows in a working medium circuit formed by the compressor 11, the in-vehicle condenser 120, and the out-vehicle condenser 130. In this case, the first on-off valve 51 blocks the second exhaust flow channel 10d, the second on-off valve 52 blocks the first exhaust flow channel 10c, the third on-off valve 53 blocks the third flow channel, the fourth on-off valve 54 unblocks the bypass flow path 10f, the fifth on-off valve 55 unblocks the pipeline, and the sixth on-off valve 56 blocks the pipeline. The first electronic expansion valve 61 and the second electronic expansion valve 62 block the pipeline, the third electronic expansion valve 63 blocks the pipeline, and the fourth electronic expansion valve 64 unblocks the pipeline to play a throttling role.

A circulation path of the working medium is sequentially as follows: the working medium flows out from the compressor 11, passes through the first pressure sensor 81, the first temperature sensor 82, the in-vehicle condenser 120, the fourth electronic expansion valve 64, the fifth on-off valve 55, the out-vehicle condenser 130, the fourth one-way valve 44, the fourth on-off valve 54, the fifth sensor 35, and the gas-liquid separator 15, and finally flows back to the compressor 11.

The high-temperature and high-pressure gaseous working medium flows out from the exhaust port of the compressor 11, and flows to the in-vehicle condenser 120 through the third exhaust flow channel 10e. The working medium is liquefied and releases heat at the in-vehicle condenser 120, then the working medium is throttled and depressurized by the fourth electronic expansion valve 64, and then flows to the out-vehicle condenser 130. The working medium exchanges heat with the environment outside the vehicle at the out-vehicle condenser 130, absorbs heat and is vaporized, and finally becomes a low-temperature and low-pressure gaseous working medium to flow in from the air inlet of the compressor 11 along the bypass flow path 10f, so that the in-vehicle condenser 120 heats the passenger compartment.

Embodiment 7 is a working condition in which only the passenger compartment is heated. In addition, the temperature of the environment outside the vehicle is low, so that the out-vehicle condenser 130 cannot absorb heat from the environment outside the vehicle.

In the working condition in which only the passenger compartment is heated, the working medium flows in a working medium circuit formed by the compressor 11, and the in-vehicle condenser 120. In this case, the first on-off valve 51 blocks the second exhaust flow channel 10d, the second on-off valve 52 blocks the first exhaust flow channel 10c, the third on-off valve 53 blocks the third flow channel, the fourth on-off valve 54 unblocks the bypass flow path 10f, the fifth on-off valve 55 blocks the pipeline, and the sixth on-off valve 56 unblocks the pipeline. The first electronic expansion valve 61 and the second electronic expansion valve 62 block the pipeline, the third electronic expansion valve 63 blocks the pipeline, and the fourth electronic expansion valve 64 unblocks the pipeline to play a throttling role.

A circulation path of the working medium is sequentially as follows: the working medium flows out from the compressor 11, passes through the first pressure sensor 81, the first temperature sensor 82, the in-vehicle condenser 120, the fourth electronic expansion valve 64, the sixth on-off valve 56, the fourth on-off valve 54, the fifth sensor 35, and the gas-liquid separator 15, and finally flows back to the compressor 11.

The high-temperature and high-pressure gaseous working medium flows out from the exhaust port of the compressor 11, and flows to the in-vehicle condenser 120 through the third exhaust flow channel 10e. The working medium is liquefied and releases heat at the in-vehicle condenser 120, then the working medium is throttled and depressurized by the fourth electronic expansion valve 64, and then flows to the bypass flow path 10f and flows in from the air inlet of the compressor 11, so that the in-vehicle condenser 120 heats the passenger compartment.

Embodiment 8 is a working condition in which only the battery is heated when the ambient temperature is high, and the first heat exchange component 21 and the second heat exchange component 22 operate separately. If the first heat exchange component 21 operates, the second heat exchange component 22 does not operate.

In the working condition in which only the battery is heated module, the working medium flows in a working medium circuit formed by the compressor 11, the first heat exchange component 21, and the evaporator 140. In this case, the first on-off valve 51 unblocks the second exhaust flow channel 10d, the second on-off valve 52 blocks the first exhaust flow channel 10c, the third on-off valve 53 blocks the third flow channel, the fourth on-off valve 54 blocks the bypass flow path 10f, the fifth on-off valve 55 blocks the pipeline, and the sixth on-off valve 56 unblocks the pipeline. The first electronic expansion valve 61 unblocks the pipeline to play a throttling role, the second electronic expansion valve 62 blocks the pipeline, the third electronic expansion valve 63 unblocks the pipeline to play a throttling role, and the fourth electronic expansion valve 64 blocks. The parallel switch valve 58 unblocks the pipeline, and the switch valve 57 blocks the series branch 10g.

A circulation path of the working medium is sequentially as follows: the working medium flows out of the compressor 11 and flows to the first branch through the first pressure sensor 81, the first temperature sensor 82, and the first on-off valve 51, and the working medium flowing to the first branch flows out of the first branch through the first sensor 31, the first heat exchange component 21, the second sensor 32, and the first electronic expansion valve 61, passes through the first one-way valve 41, the sixth on-off valve 56, the third electronic expansion valve 63, the evaporator 140, the third one-way valve 43, the fifth sensor 35, and the gas-liquid separator 15, and finally flows back to the compressor 11.

A high-temperature and high-pressure gaseous working medium flows out from the exhaust port of the compressor 11, and flows to the battery heat exchange module through the second exhaust flow channel 10d. The working medium is liquefied and releases heat at the first heat exchange component 21, and then the working medium is throttled and depressurized through the first electronic expansion valve 61 and the third electronic expansion valve 63, and then flows to the evaporator 140. The working medium absorbs heat and is vaporized at the evaporator 140, and finally becomes a low-temperature and low-pressure gaseous working medium to flow in from the air inlet of the compressor 11, so that the first heat exchange plate and the second heat exchange plate heat the battery.

Embodiment 9 is a working condition in which only the battery is heated when the ambient temperature is high, and the first heat exchange component 21 and the second heat exchange component 22 operate in parallel.

In the working condition in which only the battery is heated, the working medium flows in a working medium circuit formed by the compressor 11, the battery heat exchange module, and the evaporator 140. In this case, the first on-off valve 51 unblocks the second exhaust flow channel 10d, the second on-off valve 52 blocks the first exhaust flow channel 10c, the third on-off valve 53 blocks the third flow channel, the fourth on-off valve 54 blocks the bypass flow path 10f, the fifth on-off valve 55 blocks the pipeline, and the sixth on-off valve 56 unblocks the pipeline. The first electronic expansion valve 61 and the second electronic expansion valve 62 unblocks the pipeline to play a throttling role, the third electronic expansion valve 63 unblocks the pipeline to play a throttling role, and the fourth electronic expansion valve 64 blocks the pipeline. The parallel switch valve 58 unblocks the pipeline, and the switch valve 57 blocks the series branch 10g.

A circulation path of the working medium is sequentially as follows: the working medium flows out from the compressor 11 and flows to the first branch and the second branch through the first pressure sensor 81, the first temperature sensor 82, and the first on-off valve 51, and the working medium flowing to the first branch flows out from the first branch through the first sensor 31, the first heat exchange component 21, the second sensor 32, and the first electronic expansion valve 61, and the working medium flowing to the second branch flows out from the second branch through the parallel switch valve 58, the third sensor 33, the second heat exchange component 22, the fourth sensor 34, and the second electronic expansion valve 62, is mixed with the working medium flowing out from the first branch, then passes through the first one-way valve 41, the sixth on-off valve 56, the third electronic expansion valve 63, the evaporator 140, the third one-way valve 43, the fifth sensor 35, and the gas-liquid separator 15, and finally flows back to the compressor 11.

A high-temperature and high-pressure gaseous working medium flows out from the exhaust port of the compressor 11, and flows to the battery heat exchange module through the second exhaust flow channel 10d. The working medium is liquefied and releases heat at the first heat exchange component 21 and the second heat exchange component 22 separately, and then the working medium is restricted and reduced through the first electronic expansion valve 61, the second electronic expansion valve 62, and the third electronic expansion valve 63, and then flows to the evaporator 140. The working medium absorbs heat and is vaporized at the evaporator 140, and finally becomes a gaseous working medium with a low temperature and a low pressure to flow in from the air inlet of the compressor 11, so that the first heat exchange plate and the second heat exchange plate heat the battery.

Embodiment 10 is a working condition in which only the battery is heated when the ambient temperature is high, and the first heat exchange component 21 and the second heat exchange component 22 operate in series.

In the working condition in which only the battery is heated, the working medium flows in a working medium circuit formed by the compressor 11, the battery heat exchange module, and the evaporator 140. In this case, the first on-off valve 51 unblocks the second exhaust flow channel 10d, the second on-off valve 52 blocks the first exhaust flow channel 10c, the third on-off valve 53 blocks the third flow channel, the fourth on-off valve 54 blocks the bypass flow path 10f, the fifth on-off valve 55 blocks the pipeline, and the sixth on-off valve 56 unblocks the pipeline. The first electronic expansion valve 61 and the second electronic expansion valve 62 unblocks the pipeline to play a throttling role, the third electronic expansion valve 63 unblocks the pipeline to play a throttling role, and the fourth electronic expansion valve 64 blocks the pipeline. The parallel switch valve 58 blocks the pipeline, and the switch valve 57 unblocks the series branch 10g.

A circulation path of the working medium is sequentially as follows: the working medium flows out from the compressor 11, passes through the first pressure sensor 81, the first temperature sensor 82, the first on-off valve 51, the parallel switch valve 58, the third sensor 33, the second heat exchange component 22, the fourth sensor 34, the first sensor 31, the first heat exchange component 21, the second sensor 32, the first electronic expansion valve 61, the first one-way valve 41, the sixth on-off valve 56, the third electronic expansion valve 63, the evaporator 140, the third one-way valve 43, the fifth sensor 35, and the gas-liquid separator 15, and finally flows back to the compressor 11.

A high-temperature and high-pressure gaseous working medium flows out from the exhaust port of the compressor 11, and flows to the battery heat exchange module through the second exhaust flow channel 10d. The working medium is liquefied and releases heat at the first heat exchange component 21 and the second heat exchange component 22, and then the working medium is throttled and depressurized through the first electronic expansion valve 61 and the third electronic expansion valve 63, and then flows to the evaporator 140. The working medium absorbs heat and is vaporized at the evaporator 140, and finally becomes a low-temperature and low-pressure gaseous working medium to flow in from the air inlet of the compressor 11, so that the first heat exchange plate and the second heat exchange plate heat the battery.

Embodiment 11 is a working condition in which only the battery is heated when the ambient temperature is low, and the first heat exchange component 21 and the second heat exchange component 22 operate in parallel.

In the working condition in which only the battery is heated, the working medium flows in a working medium circuit formed by the compressor 11, the battery heat exchange module, and the evaporator 140. In this case, the first on-off valve 51 unblocks the second exhaust flow channel 10d, the second on-off valve 52 blocks the first exhaust flow channel 10c, the third on-off valve 53 blocks the third flow channel, the fourth on-off valve 54 unblocks the bypass flow path 10f, the fifth on-off valve 55 blocks the pipeline, and the sixth on-off valve 56 unblocks the pipeline. The first electronic expansion valve 61 and the second electronic expansion valve 62 unblocks the pipeline to play a throttling role, the third electronic expansion valve 63 blocks the pipeline, and the fourth electronic expansion valve 64 blocks the pipeline. The parallel switch valve 58 unblocks the pipeline, and the switch valve 57 blocks the series branch 10g.

A circulation path of the working medium is sequentially as follows: the working medium flows out from the compressor 11 and flows to the first branch and the second branch through the first pressure sensor 81, the first temperature sensor 82, and the first on-off valve 51, and the working medium flowing to the first branch flows out from the first branch through the first sensor 31, the first heat exchange component 21, the second sensor 32, and the first electronic expansion valve 61, and the working medium flowing to the second branch flows out from the second branch through the parallel switch valve 58, the third sensor 33, the second heat exchange component 22, the fourth sensor 34, and the second electronic expansion valve 62, is mixed with the working medium flowing out from the first branch, then passes through the first one-way valve 41, the sixth on-off valve 56, the fourth on-off valve 54, the fifth sensor 35, and the gas-liquid separator 15, and finally flows back to the compressor 11.

A high-temperature and high-pressure gaseous working medium flows out from the exhaust port of the compressor 11, and flows to the battery heat exchange module through the second exhaust flow channel 10d. The working medium is liquefied and releases heat at the first heat exchange component 21 and the second heat exchange component 22 separately, and then the working medium is throttled and depressurized through the first electronic expansion valve 61, the second electronic expansion valve 62, and the third electronic expansion valve 63, and then flows to the compressor 11. However, the ambient temperature is low, the working medium naturally exchanges heat during flowing, and finally becomes a low-temperature and low-pressure gaseous working medium to flow in from the air inlet of the compressor 11, so that the first heat exchange plate and the second heat exchange plate heat the battery.

Embodiment 12 is a working condition in which the ambient temperature is relatively high and the passenger compartment and the battery pack are heated simultaneously. Embodiment 12 is actually a case that Embodiment 6 operates simultaneously with any one of Embodiment 8 to Embodiment 10.

The foregoing several embodiments are merely intended for ease of describing the present disclosure and simplifying the description, and are not intended to indicate or imply that the thermal management system 100 can only operate according to a case shown in an embodiment in a specific working condition. Therefore, the embodiments should not be construed as a limitation on the present disclosure.

In some embodiments of the present disclosure, the thermal management system further includes a power thermal management subsystem 200. The power thermal management subsystem 200 includes a fourth heat exchanger 71 and a coolant circulation system. The fourth heat exchanger 71 includes a first flow channel and a second flow channel, the first flow channel is connected to the coolant circulation system, and one end of the second flow channel communicates with at least one of the first trunk line 10a and the second trunk line 10b.

The air conditioning circulation circuit 101 further included in the thermal management system 100 further includes a heating branch. One of the first trunk line 10a and the second trunk line 10b communicates with the second flow channel. The other of the first trunk line 10a and the second trunk line 10b is connected in parallel to the heating branch. The controller is configured to control at least one of the heating branch, the first trunk line 10a, and the second trunk line 10b to exchange heat.

The coolant flows in the first flow channel, and the working medium flows in the second flow channel. The first flow channel and the second flow channel are co-located in the fourth heat exchanger 71, and the first flow channel and the second flow channel can exchange heat with each other. When the temperature of the coolant flowing in the second flow channel is higher than that of the working medium flowing in the first flow channel, the working medium flows through the fourth heat exchanger 71 to absorb heat. When the temperature of the coolant flowing in the second flow channel is lower than that of the working medium flowing in the first flow channel, the working medium flows through the fourth heat exchanger 71 to release heat.

The coolant circulation system may exchange heat with the working medium with heat generated by the power thermal management subsystem 200, thereby heating the working medium or cooling the working medium by using the heat generated by the power thermal management subsystem 200, to assist the battery heat exchange module in exchanging heat for the battery.

In some embodiments of the present disclosure, as shown in FIG. 2, the power thermal management subsystem 200 includes at least one of a high-pressure thermal management subsystem 201 and an engine thermal management subsystem 202.

The high-pressure thermal management subsystem 201 may exchange heat with the air conditioning circulation circuit 101, or the engine thermal management subsystem 202 exchanges heat with the air conditioning circulation circuit 101, or both the high-pressure thermal management subsystem 201 and the engine thermal management subsystem 202 exchange heat with the air conditioning circulation circuit 101.

In some embodiments of the present disclosure, the thermal management system further includes a high-pressure thermal management subsystem 201. The high-pressure thermal management subsystem 201 includes a fourth heat exchanger 71 and a coolant circulation system. The fourth heat exchanger 71 includes a first flow channel and a second flow channel. The first flow channel is connected to the coolant circulation system. One end of the second flow channel optionally communicates with the second end and the sixth heat exchanger 12. The other end of the second flow channel is connected to the fourth heat exchanger 71.

In some embodiments of the present disclosure, the high-pressure thermal management subsystem 201 further includes: a charging and power distribution/motor assembly 72 and a first heat spreader 73. The charging and power distribution/motor assembly 72 exchanges heat with a motor and an electric control of the vehicle, and the charging and power distribution/motor assembly 72 is connected between the coolant circulation system and the first heat spreader 73. The first heat spreader 73 is adapted to exchange heat with the environment outside the vehicle.

In some embodiments of the present disclosure, the high-pressure thermal management subsystem 201 further includes: a switching valve group 74. The switching valve group 74 is connected to two ends of a circulation circuit, the charging and power distribution/motor assembly 72 separately, and the first heat spreader 73. The switching valve group 74 operates to switch the high-pressure thermal management subsystem 201 between different working conditions. The switching valve group 74 is a three-way valve.

The switching valve group 74 may control a flowing direction of the coolant, and the heat generated by the motor and the electric control of the vehicle may be used to heat the working medium, or the heat generated by the motor and the electric control of the vehicle may be dissipated to the outside of the vehicle through the first heat spreader 73.

In some embodiments of the present disclosure, the high-pressure thermal management system 100 further includes a water pump 75. The water pump 75 is arranged between the charging and power distribution/motor assembly 72 and the fourth heat exchanger 71. The water pump 75 is constructed to pump the coolant from the charging and power distribution/motor assembly 72 to the fourth heat exchanger 71.

The high-pressure thermal management subsystem 201 has a first working condition. In the first working condition, the charging and power distribution/motor assembly 72 and the second flow channel form a first circuit. The coolant flowing out from the charging and power distribution/motor assembly 72 flows to the fourth heat exchanger 71 under the action of the water pump 75. After exchanging, in the second flow channel of the fourth heat exchanger 71, heat with the working medium in the first flow channel, the coolant flows back to the charging and power distribution/motor assembly 72 to exchange heat with the motor and the electric control of the vehicle.

When the working medium circulation backflow has a heat absorption requirement and the high-pressure thermal management subsystem 201 has no heat dissipation requirement, the high-pressure thermal management subsystem 201 may operate according to the first working condition. The high-temperature coolant flowing out of the charging and power distribution/motor assembly 72 flows into the second flow channel and exchanges heat with the low-temperature working medium flowing through the first flow channel, to transfer the heat generated by the motor and the electric control of the vehicle to the working medium for circulating backflow. The heat generated by the motor and the electric control of the vehicle is effectively used, thereby improving a heating capacity of the thermal management system 100 and reducing energy consumption of the thermal management system 100.

The high-pressure thermal management subsystem 201 further has a second working condition. In the second working condition, the charging and power distribution/motor assembly 72, the first heat spreader 73, and the second flow channel form a second circuit. The coolant flowing out from the charging and power distribution/motor assembly 72 flows to the fourth heat exchanger 71 under the action of the water pump 75. After exchanging, in the second flow channel of the fourth heat exchanger 71, heat with the working medium in the first flow channel, the coolant flows to the first heat spreader 73. After exchanging heat with the first heat spreader 73, the coolant flows back to the charging and power distribution/motor assembly 72 to exchange heat with the motor and the electric control of the vehicle.

When the working medium circulation backflow has a heat absorption requirement, the high-pressure thermal management subsystem 201 has a heat dissipation requirement, and the heat dissipation requirement of the high-pressure thermal management subsystem 201 is higher than the heat absorption requirement of the working medium circulation backflow, the high-pressure thermal management subsystem 201 may operate according to the second working condition. The high-temperature coolant flowing out from the charging and power distribution/motor assembly 72 flows into the second flow channel and exchanges heat with the low-temperature working medium flowing through the first flow channel, to transfer the heat generated by the motor and the electric control of the vehicle to the working medium circulation backflow. However, the temperature of the coolant is still high after one time of heat exchange. Therefore, the coolant flows to the first heat spreader 73 and exchanges heat with the environment outside the vehicle for the second time, to dissipate heat. The heat generated by the motor and the electric control of the vehicle is effectively used, thereby improving a heating capacity of the thermal management system 100 and reducing energy consumption of the thermal management system 100.

In addition, when the working medium circulation backflow has a heat absorption requirement, the heat generated by the high-pressure thermal management subsystem 201 is insufficient, and the temperature of the coolant is lower than the temperature of the environment outside the vehicle, the high-pressure thermal management subsystem 201 may also operate according to the second working condition. The coolant exchanges heat with the environment outside the vehicle at the first heat spreader 73, to increase the temperature of the coolant. The coolant then flows to the charging and power distribution/motor assembly 72 and the fourth heat exchanger 71 through the circulation circuit, and exchanges heat with the low-temperature working medium flowing through the first flow channel, to transfer heat from the environment outside the vehicle to the working medium circulation backflow and the high-pressure thermal management subsystem 201. The heat can be effectively used, thereby improving a heating capacity of the thermal management system 100 and reducing energy consumption of the thermal management system 100.

The high-pressure thermal management subsystem 201 further includes a mixed working condition. In the mixed working condition, circulation is performed in the first circuit and the second circuit simultaneously. The coolant flowing out from the charging and power distribution/motor assembly 72 flows to the eighth heat exchanger 14 under the action of the water pump 75. After exchanging, in the second flow channel of the eighth heat exchanger 14, heat with the working medium in the first flow channel, the coolant has one part directly flowing back to the charging and power distribution/motor assembly 72 to exchange heat with the motor and the electric control of the vehicle, and the other part flowing to the first heat spreader 73. After exchanging heat with the first heat spreader 73, the coolant flows back to the charging and power distribution/motor assembly 72 to exchange heat with the motor and the electric control of the vehicle.

When the working medium circulation backflow has a heat absorption requirement, the high-pressure thermal management subsystem 201 has a heat dissipation requirement, and the heat absorption requirement of the working medium circulation backflow is higher than the heat dissipation requirement of the high-pressure thermal management subsystem 201, the high-pressure thermal management subsystem 201 may operate according to the mixed working condition.

The high-temperature coolant flowing out from the charging and power distribution/motor assembly 72 flows into the second flow channel and exchanges heat with the low-temperature working medium flowing through the first flow channel, to transfer the heat generated by the motor and the electric control of the vehicle to the working medium circulation backflow. One part of the coolant that has exchanged heat flows back to the charging and power distribution/motor assembly 72, and the other part of the coolant flows to the first heat spreader 73 and exchanges heat with the environment outside the vehicle for the second time, to dissipate heat. The heat generated by the motor and the electric control of the vehicle is effectively used, thereby improving a heating capacity of the thermal management system 100 and reducing energy consumption of the thermal management system 100.

The high-pressure thermal management subsystem 201 has a first working condition, a second working condition, and a mixed working condition. In each of the first working condition, the second working condition, and the mixed working condition, the coolant in the circulation backflow heats the working medium in the working medium circulation backflow. Therefore, when working in different working conditions, the thermal management system 100 may further operate in conjunction with different working conditions of the high-pressure thermal management subsystem 201.

For example, when only the passenger compartment is heated, cooperation with the first working condition, the second working condition, and the mixed working condition of the high-pressure thermal management subsystem 201 may be made.

In some embodiments of the present disclosure, the thermal management system further includes an engine thermal management subsystem 202. The engine thermal management subsystem 202 includes a fifth heat exchanger 76 and a coolant circulation system. The fifth heat exchanger 76 includes a third flow channel and a fourth flow channel. The third flow channel is connected to the coolant circulation system. One end of the fourth flow channel optionally communicates with the second end b and the sixth heat exchanger 124. The other end of the fourth flow channel is connected to the eighth heat exchanger 14.

In some embodiments of the present disclosure, the engine thermal management subsystem 202 further includes: an engine assembly 77 and a second heat spreader 78. The engine assembly 77 exchanges heat with the engine of the vehicle, and the engine assembly 77 is connected between the coolant circulation system and the second heat spreader 78. The second heat spreader 78 is adapted to exchange heat with the environment outside the vehicle.

A vehicle 1000 according to the embodiments of the present disclosure includes any thermal management system 100 described above.

In the vehicle 1000 according to the embodiments of the present disclosure, by arranging the foregoing thermal management system 100, the quantity of times of battery maintenance or replacement can be reduced, charging efficiency of the vehicle and convenience of use are improved, and a rationalized layout from the vehicle is facilitated.

In the description of this specification, the description of the reference terms such as "an embodiment", "some embodiments", "exemplary embodiments", "example", "specific example", or "some examples" means that the specific features, structures, materials or characteristics described with reference to the embodiment or example are included in at least one embodiment or example of the present disclosure. In this specification, schematic descriptions of the foregoing terms do not necessarily directed at a same embodiment or example. Moreover, the specific features, structures, materials, or characteristics described may be combined in any one or more embodiments or examples in an appropriate manner.

## Claims

1. A thermal management system, comprising:
a battery thermal management subsystem, the battery thermal management subsystem comprising a first trunk line (10a) and a second trunk line (10b), the first trunk line (10a) being configured to exchange heat with a first region of a battery, the second trunk line (10b) being configured to exchange heat with a second region of the battery, the first region and the second region being different, and at least one of the first trunk line (10a) and the second trunk line (10b) exchanging heat with the battery; and
at least one first heat exchanger (791), the first heat exchanger (791) being arranged at the battery thermal management subsystem and an air conditioning subsystem, and the battery thermal management subsystem and the air conditioning subsystem exchanging heat through the first heat exchanger (791).

2. The thermal management system according to claim 1, wherein the first heat exchanger (791) comprises a first flow channel and a second flow channel that exchange heat with each other, and the first flow channel is arranged at the air conditioning subsystem; and
the first trunk line (10a) and the second trunk line (10b) are connected in parallel, and two ends of the second flow channel are respectively connected to two ends of the first trunk line (10a) to form a first heat exchange circuit.

3. The thermal management system according to claim 2, wherein the first trunk line (10a) is provided with a first regulating valve (91) used for flow regulation, and the second trunk line (10b) is provided with a second regulating valve (92) used for flow regulation.

4. The thermal management system according to claim 3, wherein opening degrees of the first regulating valve (91) and the second regulating valve (92) are adjusted, to cause heat exchange amounts of the first trunk line (10a) and the second trunk line (10b) to be different.

5. The thermal management system according to any one of claims 1 to 4, wherein
when a temperature of the battery is ≥ a first temperature threshold, a temperature of the first region is higher than a temperature of the second region; or
when a temperature of the battery is ≥ a first temperature threshold, a temperature rise rate of the first region is higher than a temperature rise rate of the second region; or
when a temperature of the battery is ≥ a first temperature threshold, the first region is an electrode region of the battery, and the second region is a non-electrode region of the battery; and
at least one of the first trunk line (10a) and the second trunk line (10b) cools the battery, and the heat exchange amount of the first trunk line (10a) is greater than the heat exchange amount of the second trunk line (10b).

6. The thermal management system according to any one of claims 1 to 5, wherein
when a temperature of the battery is ≤ a second temperature threshold, a temperature of the first region is higher than a temperature of the second region; or
when a temperature of the battery is ≤ a second temperature threshold, a temperature rise rate of the first region is higher than a temperature rise rate of the second region; or
when a temperature of the battery is ≤ a second temperature threshold, the first region is an electrode region of the battery, and the second region is a non-electrode region of the battery; and
at least one of the first trunk line (10a) and the second trunk line (10b) heats the battery, and the heat exchange amount of the second trunk line (10b) is greater than the heat exchange amount of the second trunk line (10b).

7. The thermal management system according to any one of claims 1 to 6, further comprising a power thermal management subsystem (200) configured to dissipate heat for a power module.

8. The thermal management system according to claim 7, wherein the power thermal management subsystem (200) exchanges heat with the air conditioning subsystem through the first heat exchanger (791).

9. The thermal management system according to claim 7 or 8, further comprising a second heat exchanger (792), the second heat exchanger (792) being arranged at the air conditioning subsystem and the power thermal management subsystem (200), and the power thermal management subsystem (200) exchanging heat with the air conditioning subsystem through the second heat exchanger (792).

10. The thermal management system according to any one of claims 7 to 9, further comprising a switching module, the switching module being connected to the power thermal management subsystem (200) and the battery thermal management subsystem separately to enable the power thermal management subsystem (200) to connect to or disconnect from the battery thermal management subsystem.

11. The thermal management system according to claim 10, wherein the power thermal management subsystem (200) comprises:
a motor heat spreader; and
a third heat exchanger, wherein two ends of the third heat exchanger are respectively connected to two ends of the motor heat spreader, and the third heat exchanger exchanges heat with the first heat exchanger (791).

12. The thermal management system according to claim 11, wherein the first heat exchanger (791) comprises a first flow channel and a second flow channel that exchange heat with each other, and the first flow channel is arranged at the air conditioning subsystem; and
the second flow channel is connected to the battery thermal management subsystem to define at least one heat exchange circuit, and the first trunk line (10a) and the second trunk line (10b) are located in the heat exchange circuit; and
the switching module comprises a first three-way valve (111) and a second three-way valve (112), the first three-way valve (111) is connected in series to the heat exchange circuit and has one port connected to a high-pressure thermal management subsystem, and the second three-way valve (112) is connected in series to the high-pressure thermal management subsystem and has one valve port connected to the heat exchange circuit.

13. The thermal management system according to any one of claims 1 to 12, wherein the air conditioning subsystem comprises:
a compressor, wherein the compressor comprises an exhaust port and an air inlet; and
a first end of an in-vehicle condenser is connected to the exhaust port, and a second end of the in-vehicle condenser is connected to a first end of an out-vehicle condenser; and
an in-vehicle evaporator, wherein two ends of the in-vehicle evaporator are respectively connected to a second end of the out-vehicle condenser and the air inlet; and
the first heat exchanger (791) comprises a first flow channel and a second flow channel that exchange heat with each other, two ends of the first flow channel are respectively connected to the second end of the out-vehicle condenser and the air inlet, the second flow channel is connected to the battery thermal management subsystem to define at least one heat exchange circuit, and the first trunk line (10a) and the second trunk line (10b) are located in the heat exchange circuit.

14. A vehicle, comprising the thermal management system according to any one of claims 1 to 13.
